# FASCICULE DE BREVET EUROPEEN

(11) **EP 3 346 442 B1**
(45) Date de publication et mention de la délivrance du brevet: **02.02.2022**
(21) Numéro de dépôt: 17020590.0
(22) Date de dépôt: 22.12.2017
(51) Int. Cl.: H04L 29/06, G06F 21/64, H04L 9/32, G06F 16/58, G06T 1/00, H04N 1/32

(54) **PROCÉDÉS ET DISPOSITIFS POUR HORODATER DES IMAGES NUMÉRIQUES**
VERFAHREN UND VORRICHTUNGEN ZUM VERSEHEN VON DIGITALBILDERN MIT EINEM ZEITSTEMPEL
METHODS AND DEVICES FOR TIMESTAMPING DIGITAL IMAGES

(30) Priorité: 10.01.2017 FR 1770032
(43) Date de publication de la demande: 11.07.2018
(73) Titulaire: QuantifiCare S.A., 06560 Valbonne (FR)
(72) Inventeur: Thirion, Jean-Philippe, 06560 Valbonne (FR)
(74) Mandataire: Hautier IP

(56) Documents cités:
- WO-A1-2015/173001
- US-A1- 2016 119 152
- Bela Gipp ET AL: "Decentralized Trusted Timestamping using the Crypto Currency Bitcoin", , 13 février 2015 (2015-02-13), XP055394233, Extrait de l'Internet: URL:https://www.gipp.com/wp-content/paperc ite-data/pdf/gipp15a.pdf
- Anonymous: "Authentication by Newspaper - TV Tropes", , 1 octobre 2016 (2016-10-01), page 1, XP055384211, Extrait de l'Internet: URL:https://web.archive.org/web/2016100120 1830/http://tvtropes.org/pmwiki/pmwiki.php /Main/AuthenticationByNewspaper [extrait le 2017-06-22]

## Description

La présente invention concerne un procédé et un dispositif pour l'horodatage d'images qui permet d'établir qu'une image numérique a bien été prise entre deux dates.

Pouvoir établir cette preuve par l'image a un grand intérêt du point de vue légal. L'invention peut concerner la preuve que certaines opérations ont bien été effectuées à l'instant désigné dans le cadre d'études cliniques, que les patients concernés étaient bien présents lors des visites cliniques prévues et de pouvoir certifier la condition dermatologique ou esthétique de ces sujets à un instant donné. Mais beaucoup d'autres applications sont possibles, comme par exemple démontrer en le photographiant qu'un document a bien été signé à un moment donné.

### ARRIÈRE-PLAN TECHNOLOGIQUE

La date sera considérée au sens large d'une représentation alphanumérique d'un temps donné, de préférence absolu et pouvant inclure, en plus de l'identification du jour : l'heure, la minute, la seconde et même des fractions de seconde. Un exemple de temps absolu est le Temps moyen de Greenwich ou « GMT » (en anglais « Greenwich Mean Time »). Un autre exemple est le Temps Universel Coordonné ou « UTC » (en anglais « Coordinated Universal Time ») et une façon électronique de représenter cette date, au sens le plus large est décrite par la norme ISO 8601 « Data Elements and Interchange formats - Information Interchange - Représentation of dates and times », 1988. Une autre façon, informatique, de représenter le temps UTC est encore l' « Epoch Unix Time Stamp » qui est un nombre représentant le décompte des secondes écoulées depuis le 1^{er} janvier 1970 en UTC.

Les appareils photographiques disposent généralement de systèmes permettant d'horodater les photographies, soit en incrustant dans l'image une date sous la forme de caractères, soit, pour les appareils numériques, en incluant des informations dans l'entête du fichier image. Ainsi, dans la norme JPEG (en anglais « Joint Photographies Experts Group ») de stockage des photographies numériques, l'entête du fichier image nommé EXIF (en anglais « EXchangeable Image File Format ») possède des champs pour stocker les informations de date. Il existe cependant un moyen très simple de falsifier ce système d'horodatage qui consiste tout simplement à changer artificiellement la date de l'appareil photographique juste avant la prise de vue. Il existe également de nombreux logiciels permettant d'éditer l'entête EXIF de l'image pour changer les dates qui y sont inscrites. Utiliser les moyens d'un appareil photographique standard pour horodater les images est donc adapté à un usage de convenance personnelle, pour un utilisateur faisant confiance à la date de son propre appareil, mais ne peut pas servir de preuve de date dans un cadre légal car il est impossible, sauf matériel photographique très spécifique, de tracer de manière sûre que l'appareil photographique était programmé à une date UTC exacte au moment de la prise de vue.

Il existe par ailleurs de nombreux systèmes permettant de prouver qu'un document numérique ou électronique est antérieur à une date donnée appelés « horodatage certifié » (en anglais « Trusted timestamping ») . Une manière commune d'obtenir une preuve d'antériorité est de fournir le document numérique à un tiers de confiance, de réputation reconnue, qui certifiera la date de réception de cette donnée numérique. Ainsi, la norme ANSI ASC X9.95-2016 « Trusted Time Stamp Management and Security », elle-même extension de la norme RFC 3161 de 2001 : « Internet X.509 Public Key Infrastructure Time-Stamp Protocol (TSP) » définit une manière par laquelle un tiers de confiance peut certifier électroniquement qu'un document numérique est antérieur à une certaine date. Un exemple d'organisme servant de tiers de confiance est la « Société des Gens De Lettres » (SGDL) qui authentifie la création littéraire en France depuis 1838 et qui a récemment informatisé ses services afin de fournir ce type de certification de documents numériques.

Beaucoup de systèmes d'horodatage certifié utilisent des moyens de signature électronique comme par exemple le système d'Infrastructure à clés publiques « PKI » (en anglais « Public Key Infrastructure »), qui agit au moyen d'une clé publique et d'une clé privée ; la clé privée étant l'unique possession du tiers de confiance et la clé publique permettant à n'importe qui de pouvoir vérifier qu'un document électronique a été encrypté au moyen de la clé privée du tiers de confiance, sans que cette clé privée qui doit rester confidentielle ne soit révélée à aucun moment.

Il faut noter qu'il n'est pas forcément nécessaire de transmettre l'intégralité d'un document numérique pour prouver sa date d'antériorité. Dans de nombreux cas, seul un résumé concis du document appelé « empreinte numérique » ou encore « code de hachage » (en anglais « Hashcode ») est envoyé au tiers de confiance, qui retourne généralement une combinaison de l'empreinte numérique et de la date de réception encryptée avec la clé privée du tiers de confiance comme preuve à conserver d'authenticité. Un exemple de fonction de hachage cryptographique communément utilisée est le « SHA » (en Anglais « Secure Hash Algorithm »), standardisé par le « National Institute of Standards and Technology » (NIST) américain.

Afin de dématérialiser totalement, au niveau mondial, la preuve d'antériorité de documents numériques il est possible d'inclure l'empreinte numérique du document numérique dans une base de données distribuée au niveau mondial appelée « Chaîne de blocs » (« Blockchain » en anglais). Cette méthode permet de répartir l'information de preuve de manière publique sur suffisamment de sites internet indépendants à travers le monde pour dépasser en réputation celle de n'importe quel tiers de confiance et éviter la disparition de la preuve en cas de catastrophe majeure, même d'ampleur continentale. Un système de chaîne de blocs très connu est le « Bitcoin » utilisé pour dématérialiser les transactions monétaires (« Bitcoin : A Peer-to-Peer Electronic Cash System », Nakamoto, Satoshi, 24 mai 2009. Un exemple d'utilisation de la chaîne de blocs « Bitcoin » pour l'horodatage de documents électroniques est décrit dans « Decentralized Trusted Timestamping using the Crypto Currency Bitcoin », iConference 2015, Newport Beach, CA, USA, mars 24-27, 2015, Bela Gipp, Norman Meuschke et André Gernandt.

Il existe ainsi de nombreux moyens électroniques d'apporter la preuve d'antériorité d'un document numérique et à fortiori d'une photographie numérique. Cependant, il existe très peu de moyens de garantir sa « postériorité », c'est-à-dire qu'une image a été prise « après » une date donnée. En effet, une personne peut très bien acquérir une photographie numérique dans un passé lointain et modifier ses données d'horodatage par un moyen informatique ou en ayant postdaté la date de l'appareil photographique au moment de la prise de vue et enregistrer cette photographie numérique bien plus tard dans un système d'horodatage garantissant l'antériorité.

Cependant, au contraire de beaucoup d'autres données numériques, il peut être très difficile de falsifier une image en y introduisant une information qui n'était pas présente dans le champ de prise de vue du monde réel. En effet, le processus de création d'une image, comme une photographie, est un phénomène très complexe qui permet d'acquérir simultanément des millions de points connectés entre eux par des relations spatiales et représentant des interdépendances très complexes du monde réel. Plus la scène photographiée sera complexe, incluant des ombres, des parties cachées et des inter-réflexions multiples et plus il sera difficile d'y introduire à postériori un élément qui n'était pas physiquement présent dans le champ de l'image sans qu'un spécialiste du traitement d'image ne soit capable de déceler la falsification. A un niveau plus rapproché, toute modification de l'image entraine une modification du « bruit » de l'image, ce qui correspond à des variations locales très infimes de l'intensité lumineuse et il est très difficile d'introduire un élément dans cette image sans perturber ce bruit et rendre cette perturbation détectable par l'homme de l'art. Même si l'œil peut être trompé, l'homme de l'art dispose de toute une série de tests lui permettent de détecter et de certifier si le contenu d'une image a été modifiée ou non, ce qui constitue un domaine d'expertise de la police scientifique.

Dès lors, un mécanisme d'horodatage pour prouver la postériorité d'une image consiste à inclure un élément extérieur difficile à inventer à l'avance telle que la première page d'un journal du jour, encore appelée « Une », car la « Une » présente habituellement des informations qui étaient inconnues la veille. Pour pouvoir falsifier cette postériorité de l'image, il faut alors être capable de fabriquer à l'avance une impression de la première page du jour ou de falsifier la photographie numérique en y introduisant cette page de journal de façon indétectable pour l'homme de l'art. Il faut cependant noter les limites de cette utilisation du journal, qui concerne en particulier une période floue de temps pendant laquelle cette information peut ou non être considérée comme étant rendue publique, car d'une part la fabrication d'un journal implique de nombreuses personnes à même de connaitre la « Une » avant qu'elle ne soit largement diffusée et d'autre part les propriétaires du journal ou certains journalistes peuvent influencer la composition de la « Une » et donc anticiper cette « Une » dans une certaine mesure.

Une autre méthode pour déterminer une date de postériorité d'événements est présentée dans le dépôt de brevet américain 14/986,529, « Non-deterministic time génération and event-association system », Gault et co-auteurs, déposé le 31 décembre 2015, dans lequel une méthode étendant le principe de l'utilisation d'un journal, faisant appel à la génération d'une représentation non-déterministe du temps est utilisée dans le but de pouvoir démontrer la postériorité d'événements. Ce projet de brevet n'implique pas l'utilisation de chaines de blocs et il est à noter que ce projet de brevet a été abandonné, l'ensemble des revendications ayant été rejetées par l'examinateur de l'Office Américain des Brevets car jugé abstraites et n'apportant pas à l'état de l'art, suivant la règle 35 U.S.C. 101, les étapes pouvant être réalisées au moyen d'un papier et d'un crayon et l'invention manquant d'encrage dans une réalisation tangible.

Notre propre invention ajoute de manière spécifique à l'état de l'art et les procédés et dispositifs selon notre invention s'ancrent dans des opérations ne pouvant pas être réalisées par des humains utilisant simplement papier et crayon. A titre d'exemple, l'implémentation de notre invention faisant appel à l'utilisation d'une chaine de blocs pour l'enregistrement des évènements est forcément de nature non-abstraite. En effet, c'est une opération qu'il était impossible de réaliser par les humains avant l'existence d'un réseau mondial d'ordinateurs connectés qui seul rend possible des techniques de chaine de blocs de type « Bitcoin ». La combinaison des différentes étapes pour les méthodes et des différents éléments pour les dispositifs selon notre invention, permettant l'enregistrement simultané des dates d'antériorité et de postériorité d'images digitales avec une distribution de preuve au niveau mondiale, est parfaitement originale et offre de nouveaux standards de preuve par l'image, en particulier dans le domaine des études cliniques.

### RÉSUMÉ DE L'INVENTION

La présente invention est définie par les revendications indépendantes. La présente invention est un procédé et un dispositif d'horodatage d'images numériques apportant à la fois une garantie de postériorité par rapport à une première date et d'antériorité par rapport à une seconde date. Il améliore l'état de l'art consistant à photographier le journal du jour pour définir la date de postériorité et ensuite marquer l'antériorité à l'aide d'un horodatage certifié. La présente invention permet de réduire à beaucoup moins qu'une journée l'intervalle de temps entre date de postériorité et la date d'antériorité et par là-même réduit fortement les risques de falsification de l'image car cette falsification doit alors intervenir dans l'intervalle de temps très court séparant la date de postériorité et la date d'antériorité.

La présente invention fait l'usage d'un premier serveur informatique capable de délivrer un code inconnu du reste du monde avant la date de postériorité et d'un second serveur informatique capable de fournir un horodatage certifié d'une image numérique conjointe et simultanée du sujet principal et du code inconnu d'avance.

L'image numérique conjointe du sujet et du code inconnu d'avance s'entend au sens large et il pourra s'agir d'une photographie numérique ayant dans son champ de prise de vue un sujet principal et un code inconnu d'avance, de la numérisation d'une photographie du sujet et du code inconnu pris simultanément ou bien encore de la numérisation d'un document présentant également le code inconnu d'avance au moyen d'un appareil photographique numérique, d'un téléphone portable, d'un scanner numérique, d'un FAX, d'une caméra vidéo ou de tout autre système de numérisation d'images.

La notion de serveur informatique s'entend au sens large et pourra comprendre un ordinateur muni d'un processeur ou un groupe d'ordinateurs, de moyens de stockage d'informations et d'instructions, et de capacités de communication au travers d'un réseau filaire ou non-filaire.

Les dates de postériorité et d'antériorité s'entendront dans le sens le plus large et il sera avantageux d'utiliser une représentation du temps universel tel que l'UTC pour celles-ci.

La présente invention pourra comprendre en outre un troisième serveur informatique permettant de retrouver dans les données des premier et second serveurs les dates de postériorité et d'antériorité à partir d'une image numérique et de les transmettre. Il pourra être avantageux pour des questions de partage de données et d'efficacité que le premier, le second et le troisième serveur informatique soient regroupés en un seul serveur qui partage une seule base de données et soit capable à la fois de délivrer le code inconnu à l'avance, de certifier l'horodatage et de garantir les dates de postériorité et d'antériorité à partir de l'image numérique.

Un moyen de faire apparaitre ce code inconnu d'avance dans le champ de l'image numérique consiste à imprimer une représentation du code inconnu d'avance sur le sujet imagé ou sur un ou plusieurs objets contenus dans le champ de l'image. Cette impression sera à comprendre au sens large et elle inclut la possibilité de dessiner manuellement une représentation du code inconnu d'avance sur le sujet imagé, par exemple en écrivant sur la peau d'un sujet humain une représentation alphanumérique du code inconnu d'avance au moyen d'un feutre dermographique ou en écrivant manuellement ce code sur un document inclus dans le champ de prise de vue.

Ecrire le code sur la peau du sujet a l'avantage de rendre l'image numérique commune du sujet et du code inconnu d'avance extrêmement difficile à falsifier par traitement d'image à postériori à cause de l'interconnexion forte entre le sujet et le code. En effet, le sujet et le code devront présenter les mêmes variations de bruit d'image, d'éclairage et de reflets pour être considérés comme non-falsifiés, ce qui est très difficile à réaliser à postériori de façon indétectable, et de plus, l'écriture présentera des variations très locales dues à la texture de la peau très difficile également à contrefaire.

Les moyens d'impression se comprennent au sens large. En plus de la possibilité d'écriture manuelle, l'invention pourra faire usage d'une imprimante autonome ou reliée à un ordinateur ou à un téléphone portable, un appareil de type FAX et beaucoup d'autres moyens d'impression encore.

Un autre moyen de présenter le code inconnu d'avance dans l'image, qui a l'avantage de la rapidité de mise à jour, est que le premier serveur soit apte à faire parvenir le code inconnu d'avance à un terminal informatique capable d'afficher une représentation de ce code inconnu d'avance et de faire apparaitre cet affichage dans le champ de prise de vue de l'image numérique à horodater. Ce terminal informatique est à comprendre au sens large et il pourra s'agir de l'écran d'un ordinateur, d'une tablette informatique, d'un téléphone mobile ou de tout autre système électronique disposant d'un écran. Un avantage important est que dans le cas où ce terminal informatique est relié au premier serveur informatique et que le système de numérisation d'image est relié au second serveur, l'intervalle de temps entre les dates de postériorité et d'antériorité peut être inférieur à la seconde car le code peut alors être rafraichi périodiquement et très fréquemment sur cet écran et l'image numérique ou son empreinte numérique être transmise immédiatement au second serveur.

L'avantage de réduire très fortement le temps grâce à cette variante de l'invention est qu'une personne désirant falsifier une image numérique prise de façon très antérieure en y incluant l'information du code inconnu d'avance ne disposera que du temps contenu entre le moment de l'émission du code inconnu d'avance par le premier serveur et celui de la réception par le second serveur de l'image numérique ou de son empreinte numérique pour falsifier l'image numérique prise de façon très antérieure pour faire croire à la postériorité de l'image numérique par rapport au code inconnu d'avance, ce qui peut se révéler en pratique impossible.

Une autre manière encore de présenter le code inconnu d'avance dans le champ de l'image consiste à projeter sur le sujet l'image d'une représentation du code inconnu d'avance. Un avantage important de cette variante est la très forte interconnexion entre le sujet et le code inconnu d'avance ce qui rend la falsification de l'image numérique commune du sujet et du code inconnu d'avance très difficile à réaliser. Il y aura alors un avantage à ce que le système qui projette le code inconnu d'avance sur le sujet soit connecté au premier serveur afin de recevoir automatiquement et de pouvoir rafraichir périodiquement l'image projetée du code inconnu d'avance sur le sujet et ainsi réduire encore plus le temps entre l'émission du code inconnu d'avance et l'horodatage certifié. Il pourra par exemple s'agir d'un vidéoprojecteur numérique relié à un ordinateur, lui-même relié au premier serveur, d'un projecteur portable branché sur un téléphone portable ou d'autres systèmes de projection.

Le système de numérisation de l'image est à comprendre au sens large. Il pourra s'agir d'un appareil photographique numérique, d'une tablette ou d'un téléphone portable contenant un appareil photographique, d'un scanner, d'un FAX, d'une caméra vidéo, d'un instrument de radiologie ou de tout autre appareil permettant de numériser une image.

Dans tous les cas, il sera avantageux que le système de numérisation permette de transmettre au second serveur l'image numérique ou l'empreinte numérique de cette image numérique. Il y a en effet un avantage, pour des raisons de débit de transmission, à transmettre au second serveur informatique une représentation numérique compacte de l'image numérique telle qu'un code de hachage obtenu par exemple comme résultat d'une fonction de hachage cryptographique « SHA » normalisé par le NIST.

Il y aura donc un avantage à ce que le système de numérisation ou l'appareil de prise de vues soit relié à un ordinateur, lui-même relié au second serveur informatique, ou bien encore à ce que le système photographique utilisé pour la numérisation soit intégré à un téléphone portable intelligent ayant une fonction de communication avec ce second serveur, ou encore que le système de numérisation soit un appareil de type FAX capable d'envoyer l'image numérique directement au second serveur.

Dans tous les cas de l'invention, sauf peut-être dans le cas de l'écriture manuelle du code inconnu d'avance sur le sujet, il sera avantageux d'utiliser à la place d'une simple représentation alphanumérique du code inconnu d'avance une représentation par une image bidimensionnelle du code inconnu d'avance. Il pourra par exemple s'agir d'un code barre bidimensionnel, encore appelé « code barre 2D », ou bien une variante de code barre 2D appelée « code QR » (en anglais « QR Code », pour « Quick Response »). Un avantage important d'une représentation bidimensionnelle du code inconnu d'avance est l'interconnexion entre la représentation du code inconnu d'avance et du sujet, ce qui rend encore plus complexe l'acte de falsification.

Un autre avantage également d'une représentation par une image bidimensionnelle du code inconnu d'avance et en particulier du code barre 2D est qu'il présente l'avantage de pouvoir être analysé de manière automatique à partir de l'image numérique afin de pouvoir déterminer le code auparavant inconnu d'avance et d'en déduire la date exacte à partir de laquelle ce code a été diffusé.

Il pourra y avoir un avantage à ce que la représentation par une image 2D du code inconnu d'avance projeté sur le sujet soit indétectable visuellement dans l'image numérique commune du sujet et du code inconnu d'avance mais détectable uniquement grâce à des algorithmes d'analyse d'image connus de l'homme de l'art, au moyen de techniques très proches de celles utilisées pour le tatouage numérique des images (en anglais « Watermarking »). Un exemple de procédé de tatouage numérique est présenté dans « Embedding Secret Information into a Dithered Multilevel Image », Proceedings of IEEE Military Communications Conférence (1990), pp216-220, K. Tanaka, Y. Nakamura and K. Matsui. Il pourra également s'agir d'un filigrane dans le cas d'une impression papier ou sur un écran.

Des variantes de l'invention concernent la manière dont est généré le code inconnu d'avance.

Dans le cas où le propriétaire du premier serveur est reconnu comme tiers de confiance, un moyen simple de générer ce code inconnu d'avance consiste à maintenir sur le premier serveur une base de données contenant une liste de doublets constitués d'une date et d'un code aléatoire et de ne diffuser ce code aléatoire qu'au moment où cette date est atteinte, à charge au propriétaire du premier serveur d'assurer la confidentialité du code avant sa transmission. Dans le cas d'un code aléatoire calculé à une date donnée, il sera à la charge du propriétaire du premier serveur informatique de s'assurer que l'algorithme de génération du code aléatoire ne peut pas être déterminé par une personne extérieure, par exemple en nourrissant l'algorithme de génération du code aléatoire au moyen d'une clé numérique privée et en incluant également dans la génération du code la date elle-même ou des informations extérieures.

Le propriétaire du premier serveur est alors le garant de la correspondance entre le code inconnu d'avance et sa date de publication, dite date de postériorité. Il peut être intéressant que le propriétaire du premier serveur rende publique la liste de correspondance entre date et code inconnu d'avance une fois la date de postériorité passée afin de faciliter la preuve légale.

Dans une autre variante de l'invention, toujours dans laquelle le propriétaire du premier server est considéré comme tiers de confiance, le premier serveur peut encrypter une représentation alphanumérique de la date au moyen d'une clé numérique privé connue uniquement du propriétaire du premier serveur. L'avantage de cette variante est que tant que la clé privée du propriétaire du premier serveur reste confidentielle à celui-ci, la certification de postériorité possède la validé de la réputation du propriétaire du premier serveur. Un autre avantage est que si le propriétaire du premier serveur rend publique sa clé publique, alors n'importe quelle personne est capable de décrypter la date à partir du code auparavant inconnu présent dans l'image numérique, ce qui peut présenter un avantages dans un cadre de la démonstration d'une preuve légale. Un exemple de réalisation consiste pour le propriétaire du premier serveur à encrypter au moyen d'une clé privé de type PKI une représentation numérique, par exemple Epoch, du temps UTC et de rendre publique la clé publique du doublet PKI, ce qui permet de prouver la postériorité même en cas de disparition du propriétaire du premier serveur ou de sa clé privée.

Une autre variante intéressante de génération de code inconnu d'avance, qui permet de ne pas avoir besoin de reconnaitre le propriétaire du premier serveur comme un tiers de confiance, est d'incorporer dans la fabrication du code inconnu d'avance, au moyen d d'un algorithme déterministe, des informations qui, tout en étant publiques, ne pouvaient en aucune manière être connues d'avance. Un exemple de telles informations peut être un cours de bourse instantané, par exemple celui du CAC-40 ou du NASDAC, dont l'évolution est imprédictible en fonction du temps. Ce type d'information - valeur et instant du cours de bourse - est diffusé publiquement et mémorisé par de nombreux sites internet financiers. Une autre manière, scientifique, de générer le code inconnu d'avance peut comprendre des mesures objectives non prévisibles telles que l'intensité de l'activité du soleil à un instant donné, pourvu qu'une ou plusieurs sources scientifiques soit à même de mesurer et de tenir à jour officiellement la liste de ces mesures. Le code peut être composé au moyen d'une ou plusieurs sources externes d'information inconnues d'avance et dans ce cas il peut y avoir un intérêt à ce que le propriétaire du premier serveur rende publique l'algorithme déterministe de calcul du code à partir de ces sources publiques afin de permettre à chacun de pouvoir régénérer ce code à partir d'une date donnée et des informations publiques associées et ainsi vérifier la date de postériorité en toute indépendance vis-à-vis de tiers de confiance, indépendance qui peut avoir son importance dans le cadre d'une démonstration juridique.

Dans toutes ces variantes, il peut être intéressant de réduire la longueur du code inconnu d'avance généré automatiquement à partir d'informations multiples en utilisant une empreinte numérique de la combinaison de ces informations multiples.

Des variantes de l'invention concernent également la manière dont l'horodatage est certifié.

Dans le cas où le propriétaire du second serveur est considéré comme tiers de confiance, une manière simple de certifier l'horodatage est pour ce propriétaire du second serveur d'enregistrer dans une base de données l'image numérique reçue ou une empreinte électronique de cette image numérique reçue ainsi que la date de réception de cette information par le second serveur. Ainsi, le propriétaire du second serveur pourra garantir avoir reçu l'image numérique avant une date d'antériorité donnée.

Il peut y avoir un avantage à ce que le propriétaire du second serveur rende publique cette base de données de correspondance entre empreinte numérique et date de réception afin de faciliter la preuve d'antériorité et dans ce cas, le propriétaire du second serveur peut également choisir d'encrypter avec une clé numérique qui lui est privée un couple constitué de l'empreinte numérique et de la date de réception, ce qui lui permet de transmettre cette information, ainsi que sa clé publique et affranchit le propriétaire du second serveur d'avoir à maintenir lui-même cette de base de données.

Il peut également y avoir un avantage à ce que le propriétaire du second serveur garde confidentielle cette base de données de correspondances entre images numériques et dates de réception et transmette la date de réception enregistrée à partir de la réception d'une empreinte numérique en effectuant une recherche de cette empreinte numérique dans sa propre base de données.

Dans le cas où le propriétaire du second serveur ne peut pas être considéré comme tiers de confiance, il y aura un avantage à ce que le propriétaire du second serveur utilise un mécanisme de type « chaîne de blocs » afin de faire enregistrer par la communauté mondiale la preuve d'antériorité des images numériques ou des empreintes numériques reçues. Un exemple de réalisation de cette partie de l'invention est donné dans « Decentralized Trusted Timestamping using the Crypto Currency Bitcoin » déjà cité.

Dans tous les cas de réalisation de l'invention, il y a un avantage à ce qu'un troisième serveur informatique permette d'obtenir la date de postériorité à partir du code auparavant inconnu d'avance ou de l'image numérique contenant une représentation du code auparavant inconnu d'avance en recherchant dans la base de données du premier serveur s'il existe un code auparavant inconnu d'avance correspondant et en retournant dans ce cas la date de postériorité correspondante.

Il y a également un avantage à ce qu'un troisième serveur informatique soit apte à recevoir une image numérique et calcule l'empreinte numérique ou à recevoir directement cette empreinte numérique pour rechercher dans les données du second serveur si cette empreinte numérique est déjà enregistrée et dans ce cas retourner la date d'antériorité associée.

L'avantage de l'invention est ainsi de fournir un procédé et un dispositif afin de certifier une date de postériorité et une date d'antériorité d'une image numérique avec un intervalle de temps réduit entre ces deux dates afin de minimiser les risque de contrefaçon de cette image numérique.

Un autre aspect de l'invention concerne un système d'acquisition d'images comprenant des moyens de réception d'un code inconnu d'avance et des moyens pour acquérir une image contenant une représentation d'un sujet (S) et une représentation d'un code inconnu d'avance. Le système d'acquisition d'images est un élément séparable de l'invention.

### INTRODUCTION DES FIGURES

Les dessins annexés illustrent l'invention :
- La figure 1 présente un procédé selon l'invention.
- La figure 2 présente une étape supplémentaire dans le procédé permettant de récupérer une date d'antériorité à partir d'une empreinte numérique.
- La figure 3 présente une étape supplémentaire dans le procédé permettant de récupérer une date postériorité à partir d'un code auparavant inconnu d'avance.
- La figure 4 présente une étape supplémentaire du procédé permettant de récupérer à la fois une date de postériorité et d'antériorité à partir d'une image numérique.
- La figure 5 présente un dispositif selon l'invention.
- La figure 6 présente une variante du dispositif utilisant un moyen d'impression.
- La figure 7 présente une variante du dispositif utilisant un écran de présentation.
- La figure 8 présente une variante du dispositif utilisant un projecteur.
- La figure 9 présente une variante du dispositif permettant de récupérer une date d'antériorité à partir d'une empreinte numérique.
- La figure 10 présente une variante du dispositif permettant de récupérer une date de postériorité à partir d'un code auparavant inconnu d'avance.
- La figure 11 présente une variante du dispositif permettant la fabrication d'un code inconnu d'avance à partir de plusieurs sources d'informations externes.

### DESCRIPTION DÉTAILLÉE

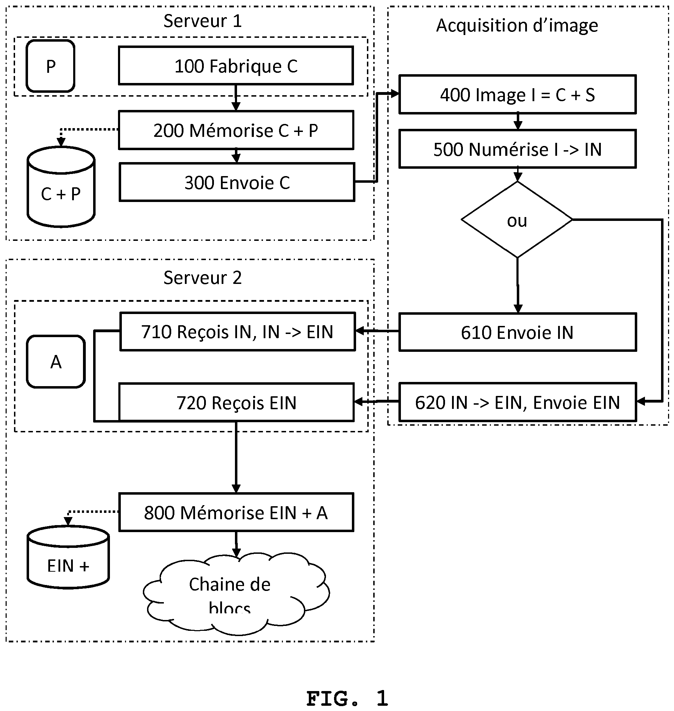

En référence à ces dessins, un procédé d'horodatage d'images numériques selon l'invention est présenté dans la figure 1 et correspond aux étapes suivantes :
- Fabrication (100) à la date de postériorité (P) par un premier serveur informatique d'un code inconnu d'avance (C).
- Envoi (200) par le premier serveur informatique dudit code inconnu d'avance (C) à un système d'acquisition d'image.
- Mémorisation (300) par ledit premier serveur informatique d'une association (C+P) entre la date de postériorité et dudit code inconnu d'avance.
- Acquisition (400) par le système d'acquisition d'image d'une image (I) contenant de façon conjointe un sujet (S) et une représentation dudit code inconnu d'avance (C).
- Numérisation (500) de l'image (I) et envoi (610) de l'image numérique (IN) obtenue, ou à défaut calcul et envoi (620) de l'empreinte numérique (EIN) de cette image numérique (IN), à un second serveur informatique pouvant être confondu avec ledit premier serveur informatique.
- Réception (710) à la date d'antériorité (A) par ledit second serveur informatique de l'image numérique (IN) dont il calcule l'empreinte numérique (EIN), ou à défaut réception (720) à la date d'antériorité (A) de l'empreinte numérique (EIN) de l'image numérique (IN).
- Mémorisation (800) par ce second serveur informatique d'une correspondance (EIN + A) entre l'empreinte numérique (EIN) et la date d'antériorité (A).

Les dates (P) et (A) s'entendent au sens large et peuvent inclure heure, minute, seconde et fraction de seconde ; la représentation Epoch de l'UTC est une manière intéressante de représenter ces dates. Il sera intéressant que le premier serveur soit synchronisé avec l'UTC, par exemple en utilisant le protocole « NTP » (en anglais « Network Time Protocol ») connu de l'homme de l'art.

Le code inconnu d'avance (C) pourra n'être connu ou connaissable que du propriétaire du premier serveur informatique, ou être généré de manière aléatoire à la date de postériorité (P) par une méthode connue seulement du propriétaire du premier serveur informatique, ou être généré en utilisant des données externes inconnues d'avance par le propriétaire du premier serveur. Ce code inconnu d'avance (C) pourra être encrypté avec une clé privée propre au propriétaire du premier serveur informatique qui pourra choisir ou non de rendre cette donnée publique une fois la date de postériorité (P) atteinte.

Le système d'acquisition d'image est à comprendre au sens large et pourra inclure un appareil photographique possiblement numérique, un téléphone portable ou une tablette munis d'un dispositif photographique, un scanner, un FAX, une caméra vidéo ou tout autre dispositif d'acquisition et de numérisation d'image. Il pourra en outre comprendre un ordinateur connecté au second serveur et capable de recueillir l'image numérisée (IN), d'en calculer l'empreinte numérique (EIN) et de la transmettre au second serveur. Il y aura un intérêt particulier à utiliser un téléphone portable intelligent muni d'un objectif photographique car ce téléphone portable disposera même sans ordinateur d'une capacité de calcul permettant d'établir l'empreinte numérique, ainsi que de moyens de communication permettant de transmettre cette empreinte numérique au second serveur.

De nombreuses manières d'acquérir une image conjointe du sujet (S) et d'une représentation du code inconnu d'avance (C) sont disponibles et pourront inclure la présence dans le champ de prise de vue de l'image d'une représentation imprimée, affichée sur un écran ou projeté du code inconnu d'avance (C). Diverses manières de représenter le code inconnu d'avance (C) sont possibles, incluant une représentation alphanumérique et/ou un code barre bidimensionnel ou un code QR. Dans le cas d'une impression, il y a un intérêt particulier à utiliser un code barre bidimensionnel ou un code QR car ceux-ci peuvent être lus de manière automatique dans une image numérique au moyen d'un algorithme d'analyse d'images connu de l'homme de l'art. Une autre façon simple de faire apparaitre ce code inconnu d'avance (C) par impression est de dessiner manuellement une représentation alphanumérique de ce code inconnu d'avance (C) sur le sujet (S) ou sur un ou plusieurs objets proches du sujet (S) et inclus dans le champ de prise de vue de l'image (I). L'impression pourra également être réalisée à partir d'une imprimante reliée à un ordinateur, à un téléphone portable intelligent ou à une tablette, réalisée par un FAX ou par tout autre dispositif électronique capable de recevoir une représentation du code inconnu d'avance et de l'imprimer. Dans le cas de la présentation sur un écran, il pourra s'agir de l'écran d'un ordinateur, d'une tablette, d'un téléphone portable intelligent ou de tout autre dispositif électronique incluant un écran et recevant le code inconnu d'avance (C) du premier serveur informatique. Dans le cas de la projection, il pourra s'agir d'un projecteur lumineux relié à un ordinateur, à un téléphone portable intelligent, à une tablette informatique ou à tout autre dispositif électronique permettant de recevoir une représentation du code inconnu d'avance (C) et de la projeter.

Les premier et second serveurs informatiques pourront être distincts ou confondus en un seul serveur informatique sans changer la nature de l'invention.

Comme indiqué, le calcul de l'empreinte numérique (EIN) de l'image numérique (IN) peut être fait indifféremment du côté du système d'acquisition d'images ou du côté du second serveur informatique sans changer la nature de l'invention. A noter qu'il y a un avantage à calculer l'empreinte numérique (EIN) du côté du système d'acquisition d'images pour des raisons de débit d'information entre ce système d'acquisition d'image et le second serveur informatique. Il y a cependant un intérêt également, mais sans que cela ne soit obligatoire, à transmettre l'image numérique (IN) afin de pouvoir la mémoriser également sur le second serveur informatique et dans ce cas le transfert de l'image numérique peut être réalisé en tâche de fond bien après un envoi par le système d'acquisition d'images au second serveur informatique de l'empreinte numérique (EIN). Dans ce dernier cas, il y aura un avantage à ce que la date d'antériorité (A) soit celle de la première réception par le second serveur informatique entre la réception de l'empreinte numérique (EIN) et la réception de l'image numérique (IN).

Au moment de l'étape de mémorisation (800) de la correspondance entre empreinte numérique (EIN) et date d'antériorité (A), une variante intéressante de l'invention consiste à ajouter une étape d'introduire d'un code formé à partir de l'empreinte numérique (EIN) et de la date d'antériorité (A) dans une chaîne de blocs. On pourra dans ce cas reposer sur la méthode proposée dans « Decentralized Trusted Timestamping using the Crypto Currency Bitcoin » déjà citée.

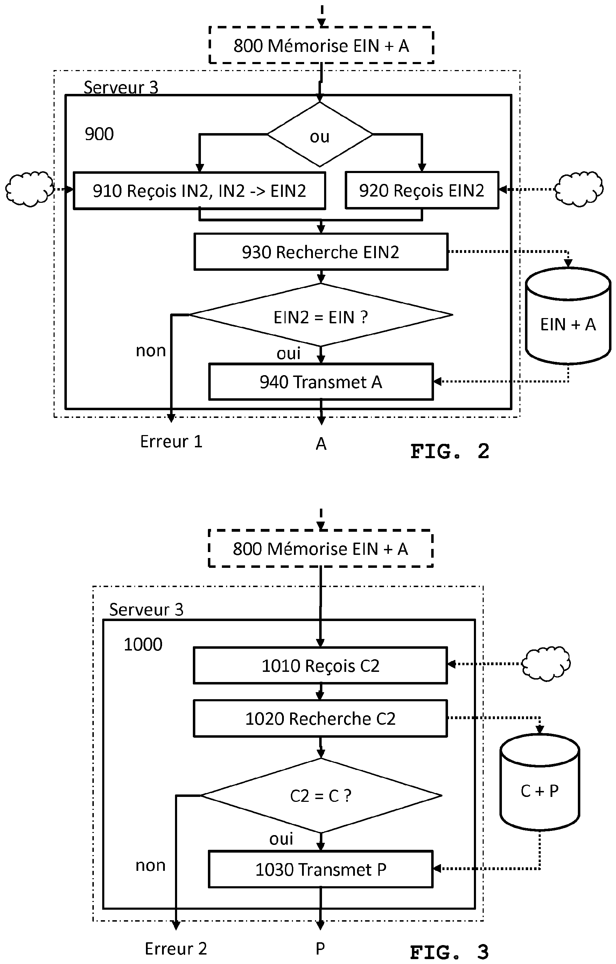

Une variante du procédé selon l'invention présentée dans la figure 2 contient une étape supplémentaire (900) qui s'exécute après la mémorisation (800) de la correspondance (EIN + A) de l'empreinte numérique (EIN) et la date d'antériorité (A) et est réalisé par un troisième serveur, possiblement confondu avec le second serveur dont il partage la base de données, ladite étape supplémentaire (900) comportant les sous-étapes suivantes :
- Réception (910) d'une seconde image numérique (IN2) et calcul d'une seconde empreinte numérique (EIN2), ou à défaut réception directe (920) d'une seconde empreinte numérique (EIN2) d'une seconde image numérique (IN2).
- Recherche (930) de la seconde empreinte numérique (EIN2) dans la base de données du second serveur informatique.
- Dans le cas où cette seconde empreinte numérique (EIN2) correspond (EIN2=EIN) à l'empreinte numérique mémorisée (EIN), transmission (940) de la date d'antériorité (A) correspondant à l'empreinte numérique (EIN) mémorisée.

Cette variante de l'invention permet à un utilisateur extérieur de pouvoir récupérer ou vérifier la date d'antériorité (A) d'une image numérique (IN2) qu'il possède ou dont il possède une empreinte numérique (EIN2).

Une variante du procédé selon l'invention présentée dans la figure 3 correspond à une étape supplémentaire (1000) qui s'exécute après la mémorisation (800) de la correspondance (EIN + A) de l'empreinte numérique (EIN) et de la date d'antériorité (A) et est réalisé par un troisième serveur, possiblement confondu avec le premier serveur dont il partage la base de données, ladite étape supplémentaire (1000) comportant les sous-étapes suivantes :
- Réception (1010) d'un second code auparavant inconnu d'avance (C2) .
- Recherche (1020) de ce second code auparavant inconnu d'avance (C2) dans la base de donnée.
- Dans le cas où ce second code auparavant inconnu d'avance (C2) correspond (C2=C) à un code auparavant inconnu d'avance (C) mémorisé, retourne (1030) la date de postériorité (P) associée au code auparavant inconnu d'avance mémorisé.

Cette variante de l'invention permet à un utilisateur extérieur de pouvoir récupérer ou vérifier la date de postériorité (P) d'un code auparavant inconnu d'avance (C2) qu'il possède ou qu'il lit, directement ou par l'intermédiaire d'un algorithme d'analyse d'images, sur une image numérique (IN2) qu'il possède.

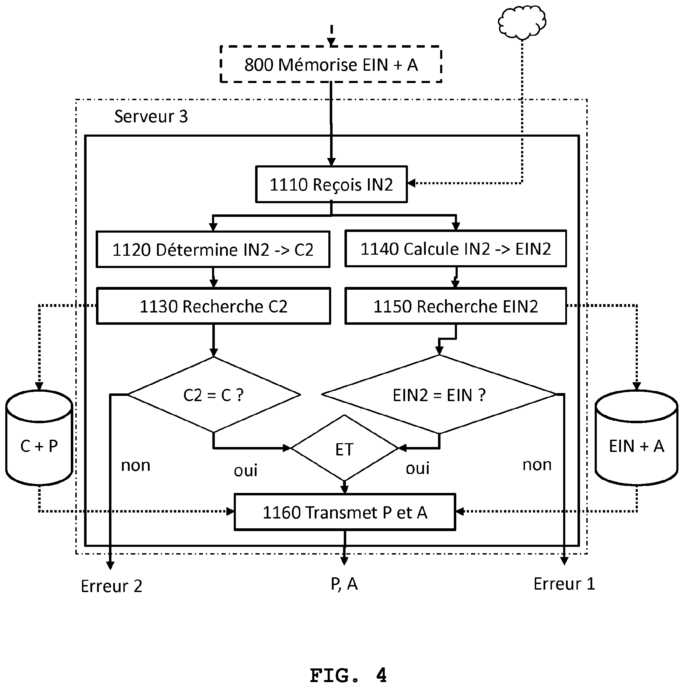

Une variante du procédé selon l'invention présentée dans la figure 4 correspond à une étape supplémentaire (1100) qui s'exécute après la mémorisation (800) de la correspondance (EIN + A) de l'empreinte numérique (EIN) et la date d'antériorité (A) et est réalisé par un troisième serveur, possiblement confondu avec le premier et le second serveur dont il partage les bases de données, ladite étape supplémentaire (1100) comportant les sous-étapes suivantes :
- Réception (1110) d'une seconde image numérique (IN2) contenant une représentation d'un second code auparavant inconnu d'avance (C2),
- Détermination (1120) du second code auparavant inconnu d'avance (C2) à partir de l'image numérique (IN2).
- Recherche (1130) de ce code auparavant inconnu d'avance (C2) dans la base de donnée du premier serveur.
- Calcul (1140) d'une seconde empreinte numérique (EIN2) à partir de la seconde image numérique (IN2).
- Recherche (1150) de la seconde empreinte numérique (EIN2) dans la base de données du second serveur.
- Dans le cas où le second code auparavant inconnu d'avance (C2) de l'étape (1120) est égal (C2=C) au code auparavant inconnu d'avance (C) mémorisé de l'étape (100) et que la seconde empreinte numérique (EIN2) obtenue à l'étape (1150) est égale (EIN2=EIN) à l'empreinte numérique (EIN) mémorisée obtenue à l'étape (710) ou à l'étape (720), transmet la date de postériorité (P) associée au code auparavant inconnu d'avance (C) mémorisé et la date d'antériorité (A) correspondant à l'empreinte numérique (EIN) mémorisée correspondant à l'image numérique (IN2=IN).

Cette variante particulièrement utile de l'invention permet à un utilisateur extérieur de pouvoir obtenir à la fois la date de postériorité (P) et la date d'antériorité (A) enregistrées d'une image numérique (IN2) qu'il possède.

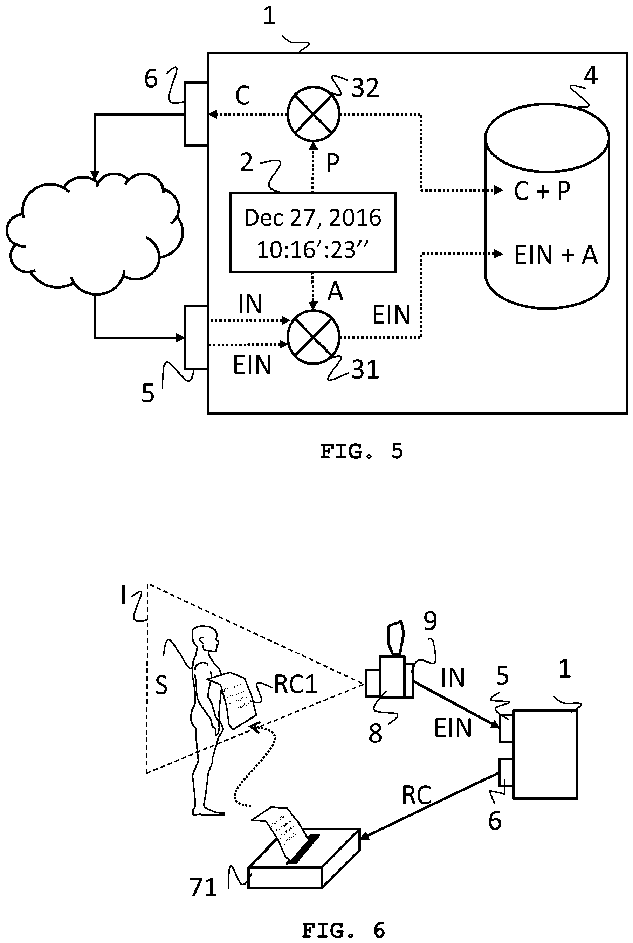

Un dispositif d'horodatage d'images numériques suivant l'invention présenté dans la figure 5 est constitué d'au moins un serveur informatique (1) apte à certifier l'antériorité de documents numériques, muni d'un système de mesure du temps (2), de moyens de calcul (3) et en particulier du calcul d'empreintes numériques de documents numériques (31), de moyens de stockage (4), de réception (5) et d'envoi (6) d'informations, caractérisé en ce que ledit serveur informatique dispose de moyens lui permettant :
- de générer (32) un code inconnu d'avance (C) et de mémoriser un couple (C + P) de données constitué du code inconnu d'avance (C) et de sa date de création (P), date (P) dite de postériorité,
- de transmettre (6) ce code inconnu d'avance (C),
- de recevoir (5) une image numérique (IN) contenant une représentation de ce code inconnu d'avance (C) et de calculer (31) l'empreinte numérique (EIN) de l'image numérique (IN) ou à défaut de recevoir directement l'empreinte numérique (EIN) de cette image numérique (IN),
- de mémoriser un couple de données (EIN + A) constitué de l'empreinte numérique (EIN) de cette image numérique (IN) et de la date de réception (A) de l'image numérique (IN) ou à défaut la date de réception (A) de son empreinte numérique (EIN), date (A) dite d'antériorité.

Ce dispositif pourra être constitué par un ordinateur connecté à Internet et apte à recevoir et à envoyer des informations et muni d'un produit programme d'ordinateur apte à enchaîner les étapes décrites dans le procédé. Une manière de synchroniser cet ordinateur au temps UTC est d'utiliser le protocole « NTP » (en anglais « Network Time Protocol ») déjà cité pour le procédé. Un moyen de générer le code inconnu d'avance (C) consiste à générer un nombre aléatoire à l'instant (P), par exemple en utilisant la fonction « srand() » du langage de programmation informatique « C » pour initialiser une séquence aléatoire, possiblement à partir de l'instant courant, puis en utilisant la fonction du langage « C » « rand() » pour générer de nouveaux nombres aléatoires. Une manière de calculer l'empreinte numérique (EIN) de l'image électronique (IN) consiste à utiliser la méthode « SHA » (en Anglais « Secure Hash Algorithm »), standardisée par le « National Institute of Standards and Technology » (NIST) américain déjà cité.

Dans une variante du dispositif selon l'invention, non représenté par une figure, l'un au moins un serveur informatique (1) selon l'invention est apte à insérer un code formé à partir de l'empreinte numérique (EIN) et de la date d'antériorité (A) dans une chaîne de blocs. On pourra dans ce cas reposer sur une implémentation de la méthode proposée dans « Decentralized Trusted Timestamping using the Crypto Currency Bitcoin » déjà citée.

La figure 6 présente une variante du dispositif selon l'invention comprenant un terminal informatique (71) équipé de moyens d'impression capables de recevoir une représentation (RC) du code inconnu d'avance (C) émise (6) par le serveur informatique (1), terminal informatique (71) apte à imprimer (RC1) cette représentation (RC) du code inconnu d'avance (C).

L'impression (RC1) est à comprendre au sens large et il pourra s'agir d'une impression papier simple ou cartonné ou une impression directement sur le sujet (S). Le système d'impression (71) pourra être une imprimante reliée à un ordinateur, à un téléphone portable intelligent ou à une tablette, à un FAX ou à tout autre dispositif électronique capable de recevoir une représentation du code inconnu d'avance et de l'imprimer. La représentation (RC) pourra être un code alphanumérique, une image bidimensionnelle de type code barre 2D ou code QR ou toute autre représentation du code inconnu d'avance (C). L'impression (RC1) sera placée au côté du sujet (S) dans le champ de prise de vue de l'image (I) ou bien directement imprimée sur le sujet (S) qui se trouvera dans le champ de prise de vue de l'image (I).

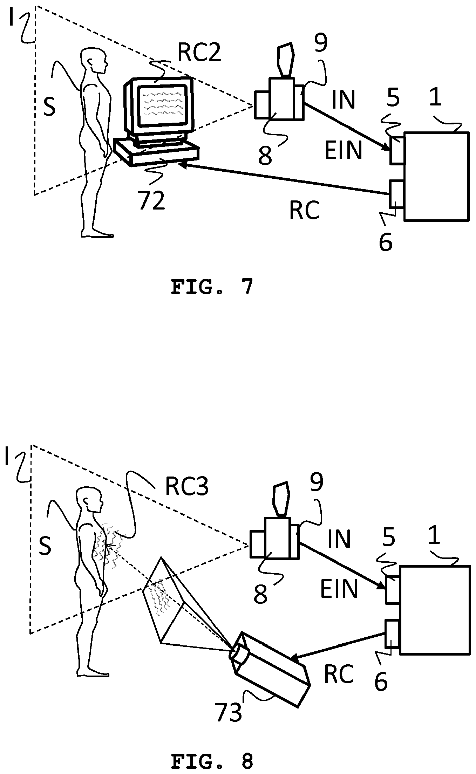

La figure 7 présente une variante du dispositif selon l'invention comprenant un terminal informatique (72) équipé d'un écran capable de recevoir du serveur informatique (1) une représentation (RC) du code inconnu d'avance (C), ce terminal informatique (72) étant apte à présenter (RC2) cette représentation (RC) du code inconnu d'avance (C) sur son écran. Le terminal informatique (72) peut être un ordinateur muni d'un écran, une tablette, un téléphone portable intelligent ou de tout autre dispositif électronique incluant un écran et apte à recevoir et à afficher le code inconnu d'avance (C) reçu du serveur informatique (1). L'écran de ce terminal informatique (72) est placé au côté du sujet (S) dans le champ de prise de vue de l'image (I) de manière à ce que la présentation (RC2) soit incluse dans l'image (I). Dans une variante de l'invention l'écran du terminal informatique (72) est le sujet (S) lui-même.

La figure 8 présente une variante du dispositif selon l'invention comprenant un terminal informatique (73) capable de recevoir du serveur informatique (1) une représentation (RC) du code inconnu d'avance (C) et de projeter (RC3) cette représentation (RC) du code inconnu d'avance (C). La projection (RC3) est incluse dans le champ de l'image (I).

Le dispositif selon l'invention peut être complété, suivant les figures 6, 7 et 8 par un système d'acquisition et de numérisation d'image (8) apte à acquérir l'image conjointe (I) d'un sujet (S) et d'une représentation (RC) du code inconnu d'avance (C) et de transmettre (9) à l'un des au moins un serveur informatique (1) une numérisation (IN) de cette image (I), ou à défaut une empreinte numérique (EIN) de cette image numérique (IN). La représentation (RC) imprimée, montrée sur un écran ou projetée est placée au côté du sujet (S) ou sur le sujet (S) de telle manière à ce que cette représentation (RC) soit incluse dans le champ de prise de vue du système d'acquisition d'image (8). Le système d'acquisition et de numérisation d'image (8) est à comprendre au sens large et il pourra s'agir d'un appareil photographique associé à un scanner, d'un appareil photographique numérique, d'un téléphone portable, d'un ordinateur ou d'une tablette muni d'un objectif photographique, d'un scanner, d'un FAX, d'une caméra vidéo ou de tout autre système électronique d'acquisition d'image. Il y aura cependant un intérêt particulier à utiliser un téléphone portable intelligent muni d'un objectif photographique car ce téléphone portable disposera même sans ordinateur d'une capacité de calcul permettant d'établir l'empreinte numérique et de moyens de communication permettant de transmettre cette empreinte numérique.

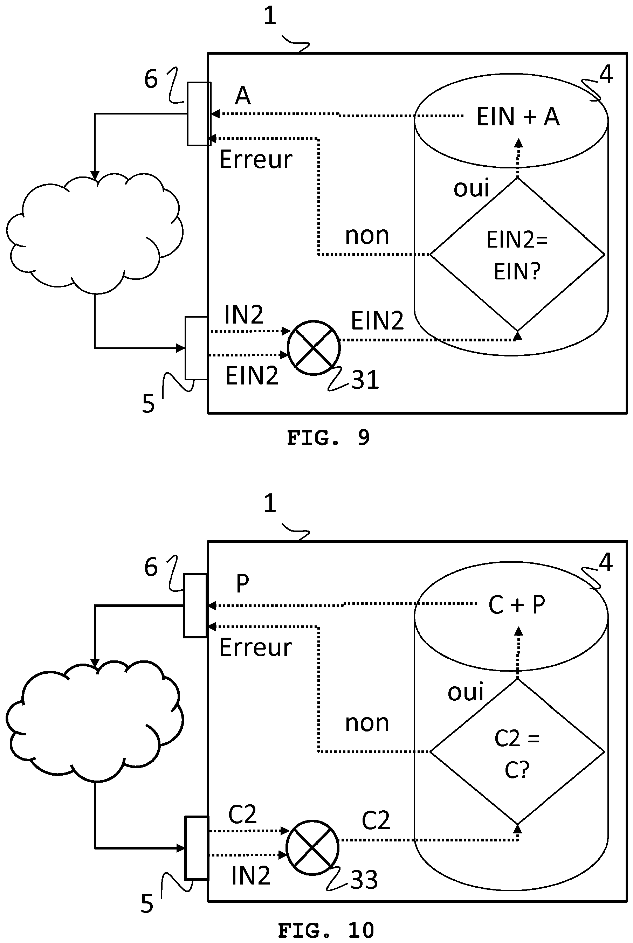

Dans une variante du dispositif selon l'invention présentée dans la figure 9, l'un des au moins un serveur informatique (1) est apte à recevoir (5) une seconde image numérique (IN2) et à calculer son empreinte numérique (EIN2), ou à défaut apte à recevoir une seconde empreinte numérique (EIN2) d'une seconde image numérique (IN2), à rechercher dans sa capacité de stockage (4) l'empreinte numérique (EIN) de l'image numérique (IN) et dans le cas où les deux empreintes numériques (EIN2) et (EIN) se correspondent, à transmettre (6) la date d'antériorité (A) associée à la paire de données mémorisées (EIN + A).

Cette variante de l'invention permet à un utilisateur extérieur de pouvoir récupérer ou vérifier la date d'antériorité (A) d'une image numérique (IN2) qu'il possède ou dont il possède une empreinte numérique (EIN2).

Dans une variante du dispositif selon l'invention présentée dans la figure 10, l'un des au moins un serveur informatique (1) est apte à recevoir (5) un second code auparavant inconnu d'avance (C2), à rechercher dans sa capacité de stockage (4) le code auparavant inconnu d'avance (C) mémorisé et dans le cas où le second code auparavant inconnu d'avance (C2) et le code auparavant inconnu d'avance mémorisé (C) se correspondent, à transmettre (6) la date de postériorité (P) associée à la paire de données mémorisées (C + P).

Cette variante de l'invention permet à un utilisateur extérieur de pouvoir récupérer ou vérifier la date de postériorité (P) d'un code auparavant inconnu d'avance (C2) qu'il possède ou qu'il lit, directement ou par l'intermédiaire d'un algorithme d'analyse d'images, sur une image numérique (IN2) qu'il possède.

Dans une variante du dispositif selon l'invention, toujours suivant la figure 10, l'un des au moins un serveur informatique (1) est apte recevoir une nouvelle image numérique (IN2) contenant la représentation d'un second code auparavant inconnu d'avance (C2), à analyser en utilisant des moyens d'analyse d'image (33) cette seconde image numérique (IN2) afin d'en extraire le second code auparavant inconnu d'avance (C2), à rechercher dans sa capacité de stockage (4) le code auparavant inconnu d'avance (C) mémorisé et dans le cas où le second code auparavant inconnu d'avance (C2) et le code auparavant inconnu d'avance (C) mémorisé se correspondent, à transmettre (6) la date de postériorité (P) associée à la paire de données mémorisée (C + P).

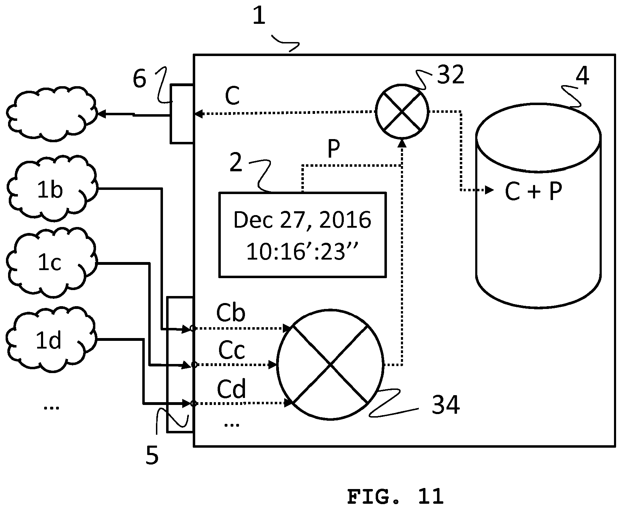

Dans une variante du dispositif selon l'invention présentée dans la figure 11, l'un des au moins un serveur informatique (1) est apte à recevoir (5) des informations en provenance d'un ensemble de serveurs informatiques (1b, le, 1d, ...) capables d'émettre des informations inconnues d'avance (Cb, Cc, Cd, ...) et utilise des moyens de calcul (34) pour établir le code inconnu d'avance (C) à partir de ces informations inconnues d'avance (Cb, Cc, Cd, ...).

Une façon d'établir le code inconnu d'avance (C) dans ce cas peut consister à concaténer les différentes informations inconnues d'avance (Cb, Cc, Cd,...) en un seul document numérique et à calculer une représentation numérique simplifiée de ce document numérique, comme par exemple une empreinte numérique de ce document, au moyen d'un code de hachage tel que le « SHA » (en Anglais « Secure Hash Algorithm »), standardisée par le « National Institute of Standards and Technology » (NIST) américain déjà cité. Un exemple de source externe d'informations inconnues d'avance peut être différents cours de bourse, des flux de données vidéo de chaînes d'information continues ou bien encore de données scientifiques d'origine spatiales en provenance d'instituts de recherche.

Le procédé et le dispositif suivant l'invention sont particulièrement destinés à permettre d'établir une date de postériorité et une date d'antériorité d'une image numérique. L'invention s'applique en particulier au cas des études cliniques où des images numériques certifiées pour leurs dates de postériorité et d'antériorité permettent d'apporter des garanties supplémentaires sur le fait que le protocole de l'étude est bien respecté pour ce qui est des opérations réalisées et des délais imposés dans une étude.

## Revendications

1. Procédé d'horodatage d'images numériques permettant d'établir qu'une image numérique a été acquise après une première date dite de postériorité (P) et avant une seconde date dite d'antériorité (A), comprenant les étapes suivantes :
- Fabrication (100) avant la date de postériorité (P) par un premier serveur informatique d'un code inconnu d'avance (C).
- Envoi (200) à la date de postériorité (P) par le premier serveur informatique du code inconnu d'avance (C).
- Mémorisation (300) par ledit premier serveur informatique d'une association (C+P) entre la date de postériorité (P) et ledit code inconnu d'avance (C).
- (i) Réception (710) à la date d'antériorité (A) par un second serveur informatique de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe, et calcul d'une empreinte numérique (EIN) de l'image numérique (IN), ou (ii) réception (720) à la date d'antériorité (A) par le second
serveur informatique d'une empreinte numérique (EIN) de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe.
- Mémorisation (800) par le second serveur informatique d'une correspondance (EIN + A) de l'empreinte numérique (EIN) et de la date d'antériorité (A).
- Etape de réception (900) qui s'exécute après la mémorisation (800) de la correspondance (EIN + A) de l'empreinte numérique (EIN) et la date d'antériorité (A) et est réalisée par un troisième serveur ayant accès à la base de données du second serveur, ladite étape de réception (900) comprenant les sous-étapes suivantes :
- Réception (910) d'une seconde image numérique (IN2) et calcul d'une seconde empreinte numérique (EIN2), ou à défaut réception directe (920) d'une seconde empreinte numérique (EIN2) d'une seconde image numérique (IN2).
- Recherche (930) de la seconde empreinte numérique (EIN2) dans la base de données du second serveur informatique.
- Dans le cas où cette seconde empreinte numérique (EIN2) correspond (EIN2=EIN) à l'empreinte numérique mémorisée (EIN), transmission (940) de la date d'antériorité (A) correspondant à l'association entre l'empreinte numérique (EIN) et la date d'antériorité (A) mémorisée.

2. Procédé d'horodatage d'images numériques permettant d'établir qu'une image numérique a été acquise après une première date dite de postériorité (P) et avant une seconde date dite d'antériorité (A), comprenant les étapes suivantes :
- Fabrication (100) avant la date de postériorité (P) par un premier serveur informatique d'un code inconnu d'avance (C).
- Envoi (200) à la date de postériorité (P) par le premier serveur informatique du code inconnu d'avance (C).
- Mémorisation (300) par ledit premier serveur informatique d'une association (C+P) entre la date de postériorité (P) et ledit code inconnu d'avance (C).
- (i) Réception (710) à la date d'antériorité (A) par un second serveur informatique de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe, et calcul d'une empreinte numérique (EIN) de l'image numérique (IN), ou (ii) réception (720) à la date d'antériorité (A) par le second
serveur informatique de l'empreinte numérique (EIN) de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe.
- Mémorisation (800) par le second serveur informatique d'une correspondance (EIN + A) de l'empreinte numérique (EIN) et de la date d'antériorité (A).
- Etape de réception (1000) qui s'exécute après la mémorisation (800) de la correspondance (EIN + A) de l'empreinte numérique (EIN) et la date d'antériorité (A) et est réalisée par un troisième serveur, ladite étape de réception (1000) comportant les sous-étapes suivantes :
- Réception (1010) d'un second code auparavant inconnu d'avance (C2) ou de manière alternative, réception (1110) d'une seconde image numérique (IN2) contenant une représentation d'un second code auparavant inconnu d'avance (C2) à partir de la seconde image numérique (IN2).
- Recherche (1020) de ce second code auparavant inconnu d'avance (C2) dans la base de données du premier serveur informatique.
- Dans le cas où ce second code auparavant inconnu d'avance (C2) correspond (C2=C) à un code auparavant inconnu d'avance (C) mémorisé, transmission de (1030) la date de postériorité (P) associée au code auparavant inconnu d'avance (C) mémorisé.

3. Procédé suivant la revendication 2 comprenant la réception (1110) d'une nouvelle image numérique (IN2) contenant une représentation du second code auparavant inconnu d'avance (C2) et la détermination (1120) du second code auparavant inconnu d'avance (C2) à partir de la nouvelle image numérique (IN2) et **caractérisé en ce qu'**il comporte les étapes supplémentaires suivantes réalisées par le troisième serveur :
- Calcul (1140) d'une seconde empreinte numérique (EIN2) à partir de la nouvelle image numérique (IN2).
- Recherche (1150) de la seconde empreinte numérique (EIN2) dans la base de données du second serveur.
- Dans le cas où la seconde empreinte numérique (EIN2) obtenue à l'étape (1150) est égale (EIN2=EIN) à l'empreinte numérique (EIN) mémorisée, transmission de la date de postériorité (P) associée au code auparavant inconnu d'avance (C) mémorisé et de la date d'antériorité (A) correspondant à l'empreinte numérique (EIN) mémorisée correspondant à l'image numérique (IN2=IN).

4. Procédé suivant les revendications 1 à 3 **caractérisé en ce que** l'étape de mémorisation (800) par le second serveur informatique d'une correspondance (EIN + A) de l'empreinte numérique (EIN) et de la date d'antériorité (A) comprend également l'insertion par le second serveur informatique dans une chaîne de blocs d'un code (EIN + A) établi à partir de l'empreinte numérique (EIN) de l'image numérique (IN) et de la date d'antériorité (A).

5. Procédé suivant les revendications 1 à 4 **caractérisé en ce que** dans l'étape de calcul (100) du code inconnu d'avance (C), celui-ci est fabriqué à partir d'informations inconnues d'avance provenant d'une ou plusieurs sources extérieures d'informations.

6. Procédé suivant l'une des revendications 1 à 5 **caractérisé en ce qu'**il comporte, entre l'étape de l'envoi (200) du code inconnu d'avance (C) et celle de la réception (710) de l'image numérique (IN) ou de la réception (720) de l'empreinte numérique (EIN) de l'image numérique (IN), les étapes suivantes :
- Acquisition (400) par le système d'acquisition d'image d'une image (I) contenant de façon conjointe un sujet (S) et une représentation du code inconnu d'avance (C) envoyé par le premier serveur.
- Numérisation (500) de l'image (I) et envoi (610) de l'image numérique (IN) obtenue, ou calcul et envoi (620) de l'empreinte numérique (EIN) de cette image numérique (IN), au second serveur informatique.

7. Procédé suivant l'une des revendications 1 à 6 **caractérisé en ce qu'**une représentation du code inconnu d'avance (C) est imprimée sur le sujet ou sur un ou plusieurs objets et qu'au moins une représentation du code inconnu d'avance soit contenue dans le champ de prise de vue de ladite image (I).

8. Procédé suivant l'une des revendications 1 à 6 **caractérisé en ce qu'**une représentation du code inconnu d'avance (C) est affichée sur un ou plusieurs écrans contenus dans le champ de prise de vue de ladite image (I).

9. Procédé suivant l'une des revendications 1 à 6 **caractérisé en ce qu'**une représentation du code inconnu d'avance (C) est projetée sur le sujet (S) ou sur un ou plusieurs objets et que la projection d'au moins une représentation du code inconnu d'avance (C) est contenue dans le champ de prise de vue de ladite image (I).

10. Dispositif d'horodatage d'images numériques comprenant au moins un serveur informatique (1) apte à certifier l'antériorité de documents numériques, muni d'un système de mesure du temps (2), de moyens de calcul (3) et en particulier du calcul d'empreintes numériques de documents numériques (31), de moyens de stockage (4), de réception (5) et d'envoi (6) d'informations, **caractérisé en ce que** ledit serveur informatique dispose de moyens lui permettant :
- de générer (32) un code inconnu d'avance (C) et de mémoriser un couple (C + P) de données constitué du code inconnu d'avance (C) et de sa date de création (P), date (P) dite de postériorité,
- de transmettre (6) ce code inconnu d'avance (C),
- (i) de recevoir (5) une image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN), et de calculer (31) l'empreinte numérique (EIN) de l'image numérique (IN),
ou (ii) de recevoir directement l'empreinte numérique (EIN) de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe,
- de mémoriser un couple de données (EIN + A) constitué de l'empreinte numérique (EIN) de cette image numérique (IN) et de la date de réception (A) de l'image numérique (IN) ou à défaut de la date de réception (A) de son empreinte numérique (EIN), date (A) dite d'antériorité.
- de recevoir (5) une seconde image numérique (IN2) et à calculer son empreinte numérique (EIN2), ou à défaut apte à recevoir une seconde empreinte numérique (EIN2) d'une seconde image numérique (IN2), à rechercher dans sa capacité de stockage (4) l'empreinte numérique (EIN) de l'image numérique (IN) et dans le cas où les deux empreintes numériques (EIN2) et (EIN) se correspondent, à transmettre (6) la date d'antériorité (A) associée au couple de données mémorisées (EIN + A).

11. Dispositif d'horodatage d'images numériques comprenant au moins un serveur informatique (1) apte à certifier l'antériorité de documents numériques, muni d'un système de mesure du temps (2), de moyens de calcul (3) et en particulier du calcul d'empreintes numériques de documents numériques (31), de moyens de stockage (4), de réception (5) et d'envoi (6) d'informations, **caractérisé en ce que** ledit serveur informatique dispose de moyens lui permettant :
- de générer (32) un code inconnu d'avance (C) et de mémoriser un couple (C + P) de données constitué du code inconnu d'avance (C) et de sa date de création (P), date (P) dite de postériorité,
- de transmettre (6) ce code inconnu d'avance (C),
- (ii) de recevoir (5) une image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN), et de calculer (31) l'empreinte numérique (EIN) de l'image numérique (IN),
ou (ii) de recevoir directement l'empreinte numérique (EIN) de l'image numérique (IN) conjointe d'un sujet (S) et d'une représentation du code inconnu d'avance (C), cette représentation du code inconnu d'avance (C) étant imprimée, écrite ou projetée sur le sujet ou sur un ou plusieurs objets de sorte qu'au moins une représentation du code inconnu d'avance imprimée, écrite ou projetée soit contenue dans le champ de prise de vue de ladite image numérique (IN) conjointe,
- de mémoriser un couple de données (EIN + A) constitué de l'empreinte numérique (EIN) de cette image numérique (IN) et de la date de réception (A) de l'image numérique (IN) ou à défaut de la date de réception (A) de son empreinte numérique (EIN), date (A) dite d'antériorité.
- de recevoir (5) un second code auparavant inconnu d'avance (C2) ou alternativement recevoir une nouvelle image numérique (IN2) contenant la représentation d'un second code auparavant inconnu d'avance (C2) et d'analyser en utilisant des moyens d'analyse d'image (33) cette nouvelle image numérique (IN2) afin d'en extraire le second code auparavant inconnu d'avance (C2),
- de rechercher dans sa capacité de stockage (4) le code auparavant inconnu d'avance (C) mémorisé et dans le cas où le second code auparavant inconnu d'avance (C2) et le code auparavant inconnu d'avance mémorisé (C) se correspondent, à transmettre (6) la date de postériorité (P) associée au couple de données mémorisées (C + P).

12. Dispositif suivant la revendication 11 adapté à recevoir une autre image numérique (IN2) contenant la représentation du second code auparavant inconnu d'avance (C2) et d'analyser en utilisant des moyens d'analyse d'image (33) cette autre nouvelle image numérique (IN2) afin d'en extraire le second code auparavant inconnu d'avance (C2), **caractérisé par le fait qu'**il permet de plus de rechercher dans sa capacité de stockage (4) l'empreinte numérique (EIN) de l'image numérique (IN) et dans le cas où l'empreinte numérique (EIN) de l'image numérique (IN) correspond à l'empreinte numérique (EIN2) de cette autre image numérique (IN2), à transmettre (6) la date d'antériorité (A) associée au couple de données mémorisées (EIN + A).

13. Dispositif suivant les revendications 10 à 12 **caractérisé en ce qu'**il permet d'inclure dans une chaîne de blocs un code (EIN + A) établi à partir de la date d'antériorité (A) et de l'empreinte numérique (EIN) de l'image numérique (IN).

14. Dispositif suivant l'une des revendications 10 à 13 **caractérisé en ce que** l'un des au moins un serveur informatique (1) soit apte à recevoir (5) des informations en provenance d'un ensemble de serveurs (1b, le, 1d, ...) capables d'émettre des informations inconnues d'avance (Cb, Cc, Cd, ...) et utilise des moyens de calcul (34) pour établir le code inconnu d'avance (C) à partir de ces informations inconnues d'avance (Cb, Cc, Cd,...).

15. Dispositif suivant l'une des revendications 10 à 14 **caractérisé en ce qu'**il comprend un terminal informatique (71) équipé de moyens d'impression, que l'un des au moins un serveur informatique soit capable de transmettre (6) une représentation (RC) du code inconnu d'avance (C) à ce terminal informatique (71) et que ce terminal informatique (71) est apte à imprimer (RC1) cette représentation (RC) du code inconnu d'avance (C).

16. Dispositif suivant l'une des revendications 10 à 14 **caractérisé en ce qu'**il comprend un terminal informatique (72) équipé d'un écran, que l'un des au moins un serveur informatique (1) est capable de transmettre une représentation (RC) du code inconnu d'avance (C) à ce terminal informatique (72) et que ce terminal informatique (72) est apte à présenter (RC2) cette représentation (RC) du code inconnu d'avance (C) sur son écran.

17. Dispositif suivant l'une des revendications 10 à 14 **caractérisé en ce qu'**il comprend un terminal informatique (73) capable de projeter une image, que le serveur informatique est apte à transmettre une représentation (RC) du code inconnu d'avance à ce terminal informatique (73) et que ce terminal informatique est apte à projeter (RC3) cette représentation (RC) du code inconnu d'avance (C).

18. Dispositif suivant l'une des revendications 10 à 17, **caractérisé en ce qu'**il comprend un système d'acquisition et de numérisation d'image (8) apte à acquérir l'image conjointe (I) d'un sujet (S) et d'une représentation (RC) du code inconnu d'avance (C) et de transmettre (9) à l'un des au moins un serveur informatique (1) une numérisation (IN) de cette image (I), ou à défaut une empreinte numérique (EIN) de cette image numérique (IN) .

19. Produit programme d'ordinateur comprenant des instructions pour, lorsqu'elles sont exécutées par un processeur, mettre en œuvre les étapes du procédé selon l'une des revendications 1 à 9.

## Patentansprüche

1. Verfahren zum Versehen von Digitalbildern mit einem Zeitstempel, das das Feststellen ermöglicht, dass ein Digitalbild nach einem früheren ersten Zeitpunkt (P) und vor einem späteren zweiten Zeitpunkt (A) aufgenommen wurde, umfassend die folgenden Schritte:
- Erzeugen (100) eines im Voraus unbekannten Codes (C) durch einen ersten Computerserver vor dem früheren Zeitpunkt (P),
- Senden (200) des im Voraus unbekannten Codes (C) durch den ersten Computerserver zu dem früheren Zeitpunkt (P),
- Speichern (300) einer Verbindung (C+P) zwischen dem früheren Zeitpunkt (P) und dem im Voraus unbekannten Code (C) durch den ersten Computerserver,
- (i) Empfangen (710), durch einen zweiten Computerserver, des Digitalbildes (IN) gemeinsam mit einem Subjekt (S) und einer Abbildung des im Voraus unbekannten Codes (C) zu dem späteren Zeitpunkt (A), wobei die Abbildung des im Voraus unbekannten Codes (C) auf das Subjekt oder auf ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist, und Berechnen eines digitalen Fingerabdrucks (EIN) des Digitalbildes (IN),
oder (ii) Empfangen (720), durch den zweiten Computerserver, eines digitalen Fingerabdrucks (EIN) des Digitalbildes (IN) gemeinsam mit einem Subjekt (S) und einer Abbildung des im Voraus unbekannten Codes (C) zu dem späteren Zeitpunkt (A), wobei die Abbildung des im Voraus unbekannten Codes (C) auf das Subjekt oder ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist,
- Speichern (800) einer Übereinstimmung (EIN + A) des digitalen Fingerabdrucks (EIN) und des späteren Zeitpunkts (A) durch den zweiten Computerserver,
- Schritt des Empfangens (900), der nach dem Speichern (800) der Übereinstimmung (EIN + A) des digitalen Fingerabdrucks (EIN) und des späteren Zeitpunkts (A) ausgeführt und durch einen dritten Server mit Zugriff auf die Datenbank des zweiten Servers durchgeführt wird, wobei der Schritt des Empfangens (900) die folgenden Unterschritte umfasst:
- Empfangen (910) eines zweiten Digitalbildes (IN2) und Berechnen eines zweiten digitalen Fingerabdrucks (EIN2) oder gegebenenfalls direktes Empfangen (920) eines zweiten digitalen Fingerabdrucks (EIN2) eines zweiten Digitalbildes (IN2),
- Ermitteln (930) des zweiten digitalen Fingerabdrucks (EIN2) in der Datenbank des zweiten Computerservers,
- im Fall, dass dieser zweite digitale Fingerabdruck (EIN2) dem gespeicherten digitalen Fingerabdruck (EIN) entspricht (EIN2=EIN), Übertragen (940) des späteren Zeitpunkts (A), der der Verbindung zwischen dem digitalen Fingerabdruck (EIN) und dem gespeicherten späteren Zeitpunkt (A) entspricht.

2. Verfahren zum Versehen von Digitalbildern mit einem Zeitstempel, das das Feststellen ermöglicht, dass ein Digitalbild nach einem früheren ersten Zeitpunkt (P) und vor einem späteren zweiten Zeitpunkt (A) aufgenommen wurde, umfassend die folgenden Schritte:
- Erzeugen (100) eines im Voraus unbekannten Codes (C) durch einen ersten Computerserver vor dem früheren Zeitpunkt (P),
- Senden (200) des im Voraus unbekannten Codes (C) durch den ersten Computerserver zu dem früheren Zeitpunkt (P),
- Speichern (300) einer Verbindung (C+P) zwischen dem früheren Zeitpunkt (P) und dem im Voraus unbekannten Code (C) durch den ersten Computerserver,
- (i) Empfangen (710), durch einen zweiten Computerserver, des Digitalbildes (IN) gemeinsam mit einem Subjekt (S) und einer Abbildung des im Voraus unbekannten Codes (C) zu dem späteren Zeitpunkt (A), wobei die Abbildung des im Voraus unbekannten Codes (C) auf das Subjekt oder auf ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist, und Berechnen eines digitalen Fingerabdrucks (EIN) des Digitalbildes (IN),
oder
- (ii) Empfangen (720), durch den zweiten Computerserver, eines digitalen Fingerabdrucks (EIN) des Digitalbildes (IN) gemeinsam mit einem Subjekt (S) und einer Abbildung des im Voraus unbekannten Codes (C) zu dem späteren Zeitpunkt (A), wobei die Abbildung des im Voraus unbekannten Codes (C) auf das Subjekt oder ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist,
- Speichern (800) einer Übereinstimmung (EIN + A) des digitalen Fingerabdrucks (EIN) und des späteren Zeitpunkts (A) durch den zweiten Computerserver,
- Schritt des Empfangens (1000), der nach dem Speichern (800) der Übereinstimmung (EIN + A) des digitalen Fingerabdrucks (EIN) und des späteren Zeitpunkts (A) ausgeführt und durch einen dritten Server durchgeführt wird, wobei der Schritt des Empfangens (1000) die folgenden Unterschritte umfasst:
- Empfangen (1010) eines zuvor im Voraus unbekannten zweiten Codes (C2) oder alternativ Empfangen (1110) eines zweiten Digitalbildes (IN2), das eine Abbildung eines zuvor im Voraus unbekannten zweiten Codes (C2) von dem zweiten Digitalbild (IN2) enthält,
- Ermitteln (1020) des zuvor im Voraus unbekannten Codes (C2) in der Datenbank des ersten Computerservers,
- im Fall, dass der zuvor im Voraus unbekannte zweite Code (C2) einem gespeicherten zuvor im Voraus unbekannten Code (C) entspricht (C2=C), Übertragen (1030) des früheren Zeitpunkts (P), der mit dem gespeicherten zuvor im Voraus unbekannten Code (C) in Verbindung steht.

3. Verfahren nach Anspruch 2, umfassend das Empfangen (1110) eines neuen Digitalbildes (IN2), das eine Abbildung des zuvor im Voraus unbekannten zweiten Codes (C2) enthält, und das Bestimmen (1120) des zuvor im Voraus unbekannten zweiten Codes (C2) von dem neuen Digitalbild (IN2), und **dadurch gekennzeichnet, dass** es die folgenden zusätzlichen Schritte, die durch den dritten Server durchgeführt werden, umfasst:
- Berechnen (1140) eines zweiten digitalen Fingerabdrucks (EIN2) von dem neuen Digitalbild (IN2),
- Ermitteln (1150) des zweiten digitalen Fingerabdrucks (EIN2) in der Datenbank des zweiten Servers,
- im Fall, dass der im Schritt (1150) erhaltene zweite digitale Fingerabdruck (EIN2) dem gespeicherten digitalen Fingerabdruck (EIN) gleich (EIN2=EIN) ist, Übertragen des früheren Zeitpunkts (P), der mit dem gespeicherten zuvor im Voraus unbekannten Code (C) in Verbindung steht, und des späteren Zeitpunkts (A), der dem dem Digitalbild entsprechenden (IN2=IN) gespeicherten digitalen Fingerabdruck (EIN) entspricht.

4. Verfahren nach den Ansprüchen 1 bis 3, **dadurch gekennzeichnet, dass** der Schritt des Speicherns (800) einer Übereinstimmung (EIN + A) des digitalen Fingerabdrucks (EIN) und des späteren Zeitpunkts (A) durch den zweiten Computerserver auch das Einfügen eines aus dem digitalen Fingerabdruck (EIN) des Digitalbildes (IN) und des späteren Zeitpunkts (A) hergestellten Codes (EIN + A) in eine Blockkette durch den zweiten Computerserver umfasst.

5. Verfahren nach den Ansprüchen 1 bis 4, **dadurch gekennzeichnet, dass** im Schritt des Berechnens (100) des im Voraus unbekannten Codes (C) dieser aus den im Voraus unbekannten Informationen, die von einer oder mehreren externen Informationsquellen stammen, erzeugt wird.

6. Verfahren nach einem der Ansprüche 1 bis 5, **dadurch gekennzeichnet, dass** es zwischen dem Schritt des Sendens (200) des im Voraus unbekannten Codes (C) und dem des Empfangens (710) des Digitalbildes (IN) oder des Empfangens (720) des digitalen Fingerabdrucks (EIN) des Digitalbildes (IN) die folgenden Schritte aufweist:
- Beschaffen (400) eines Bildes (I), das ein Subjekt (S) und eine Abbildung des im Voraus unbekannten Codes (C) enthält und von dem ersten Server gesendet wird, durch das Bildbeschaffungssystem,
- Digitalisieren (500) des Bildes (I) und Senden (610) des erhaltenen Digitalbildes (IN) oder Berechnen und Senden (620) des digitalen Fingerabdrucks (EIN) des Digitalbildes (IN) zum zweiten Computerserver.

7. Verfahren nach einem der Ansprüche 1 bis 6, **dadurch gekennzeichnet, dass** eine Abbildung des im Voraus unbekannten Codes (C) auf das Subjekt oder auf ein oder mehrere Objekte gedruckt ist und mindestens eine Abbildung des im Voraus unbekannten Codes im Sichtfeld des Bildes (I) enthalten ist.

8. Verfahren nach einem der Ansprüche 1 bis 6, **dadurch gekennzeichnet, dass** eine Abbildung des im Voraus unbekannten Codes (C) auf einer oder mehreren Anzeigen im Sichtfeld des Bildes (I) angezeigt wird.

9. Verfahren nach einem der Ansprüche 1 bis 6, **dadurch gekennzeichnet, dass** eine Abbildung des im Voraus unbekannten Codes (C) auf das Subjekt (S) oder auf ein oder mehrere Objekte projiziert ist und dass die Projizierung mindestens einer Abbildung des im Voraus unbekannten Codes (C) im Sichtfeld des Bildes (I) enthalten ist.

10. Vorrichtung zum Versehen von Digitalbildern mit einem Zeitstempel, umfassend mindestens einen Computerserver (1), der ausgebildet ist, um den Zeitpunkt digitaler Dokumente zu bestätigen, ausgestattet mit einem Zeitmessungssystem (2), Mittel zum Berechnen (3) und insbesondere zum Berechnen digitaler Fingerabdrücke von digitalen Dokumenten (31), Mittel zur Speicherung (4), zum Empfang (5) und zur Sendung (6) von Informationen, **dadurch gekennzeichnet, dass** der über diese Mittel verfügende Computerserver ihr Folgendes gestattet:
- Generieren (32) eines im Voraus unbekannten Codes (C) und Speichern eines Datenpaars (C + P), bestehend aus dem im Voraus unbekannten Code (C) und seinem Erstellungszeitpunkt (P), dem früheren Zeitpunkt (P),
- Übertragen (6) des im Voraus unbekannten Codes (C),
- (i) Empfangen (5) eines Digitalbildes (IN) gemeinsam mit einem Subjekt (S) und einer Abbildung des im Voraus unbekannten Codes (C), wobei die Abbildung des im Voraus unbekannten Codes (C) auf das Subjekt oder auf ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist, und Berechnen (31) des digitalen Fingerabdrucks (EIN) des Digitalbildes (IN),
oder (ii) direktes Empfangen des digitalen Fingerabdrucks (EIN) des Digitalbildes (IN) gemeinsam mit einem Subjekt (S) und einer Abbildung des im Voraus unbekannten Codes (C), wobei die Abbildung des im Voraus unbekannten Codes (C) auf das Subjekt oder ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist,
- Speichern eines Datenpaars (EIN + A), bestehend aus dem digitalen Fingerabdruck (EIN) des Digitalbildes (IN) und dem Empfangszeitpunkt (A) des Digitalbildes (IN) oder gegebenenfalls dem Empfangszeitpunkt (A) seines digitalen Fingerabdrucks (EIN), dem späteren Zeitpunkt (A),
- Empfangen (5) eines zweiten Digitalbildes (IN2) und Berechnen seines digitalen Fingerabdrucks (EIN2), oder gegebenenfalls ausgebildet zum Empfangen eines zweiten digitalen Fingerabdrucks (EIN2) eines zweiten Digitalbildes (IN2), zum Ermitteln des digitalen Fingerabdrucks (EIN) des Digitalbildes (IN) in der Speicherungskapazität (4), und im Fall, dass die zwei digitalen Fingerabdrücke (EIN2) und (EIN) übereinstimmen, Übertragen (6) des späteren Zeitpunkts (A), der mit dem gespeicherten Datenpaar (EIN + A) in Verbindung steht.

11. Vorrichtung zum Versehen von Digitalbildern mit einem Zeitstempel, umfassend mindestens einen Computerserver (1), der ausgebildet ist, um den Zeitpunkt digitaler Dokumente zu bestätigen, ausgestattet mit einem Zeitmessungssystem (2), Mittel zum Berechnen (3) und insbesondere zum Berechnen digitaler Fingerabdrücke von digitalen Dokumenten (31), Mittel zur Speicherung (4), zum Empfang (5) und zur Sendung (6) von Informationen, **dadurch gekennzeichnet, dass** der über diese Mittel verfügende Computerserver ihr Folgendes gestattet:
- Generieren (32) eines im Voraus unbekannten Codes (C) und Speichern eines Datenpaars (C + P), bestehend aus dem im Voraus unbekannten Code (C) und seinem Erstellungszeitpunkt (P), dem früheren Zeitpunkt (P),
- Übertragen (6) des im Voraus unbekannten Codes (C),
- (ii) Empfangen (5) eines Digitalbildes (IN) gemeinsam mit einem Subjekt (S) und einer Abbildung des im Voraus unbekannten Codes (C), wobei die Abbildung des im Voraus unbekannten Codes (C) auf das Subjekt oder auf ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist, und Berechnen (31) des digitalen Fingerabdrucks (EIN) des Digitalbildes (IN),
oder (ii) direktes Empfangen des digitalen Fingerabdrucks (EIN) des Digitalbildes (IN) gemeinsam mit einem Subjekt (S) und einer Abbildung des im Voraus unbekannten Codes (C), wobei die Abbildung des im Voraus unbekannten Codes (C) auf das Subjekt oder ein oder mehrere Objekte gedruckt, geschrieben oder projiziert ist, so dass mindestens eine Abbildung des gedruckten, geschriebenen oder projizierten im Voraus unbekannten Codes im Sichtfeld des gemeinsamen Digitalbildes (IN) enthalten ist,
- Speichern eines Datenpaars (EIN + A), bestehend aus dem digitalen Fingerabdruck (EIN) des Digitalbildes (IN) und dem Empfangszeitpunkt (A) des Digitalbildes (IN) oder gegebenenfalls dem Empfangszeitpunkt (A) seines digitalen Fingerabdrucks (EIN), dem späteren Zeitpunkt (A),
- Empfangen (5) eines zuvor im Voraus unbekannten zweiten Codes (C2) oder alternativ Empfangen eines neuen Digitalbildes (C2), das die Abbildung des zuvor im Voraus unbekannten zweiten Codes (C2) enthält, und Analysieren des neuen Digitalbildes (IN2) mit Hilfe der Bildanalysemittel (33), um den zuvor im Voraus unbekannten Code (C2) aus diesem zu extrahieren,
- Ermitteln des gespeicherten zuvor im Voraus unbekannten Codes (C) in der Speicherungskapazität (4), und im Fall, dass der zuvor im Voraus unbekannte zweite Code (C2) und der gespeicherte zuvor im Voraus unbekannte Code (C) übereinstimmen, Übertragen (6) des früheren Zeitpunkts (P), der mit dem gespeicherten Datenpaar (C + P) in Verbindung steht.

12. Vorrichtung nach Anspruch 11, die ausgelegt ist zum Empfangen eines zweiten Digitalbildes (IN2), das die Abbildung des zuvor im Voraus unbekannten zweiten Codes (C2) enthält, und zum Analysieren des zweiten neuen Digitalbildes (IN2) mit Hilfe der Bildanalysemittel (33), um den zuvor im Voraus unbekannten zweiten Code (C2) aus diesem zu extrahieren, **dadurch gekennzeichnet, dass** sie ferner das Ermitteln des digitalen Fingerabdrucks (EIN) des Digitalbildes (IN) in der Speicherungskapazität (4) gestattet, und im Fall, dass der digitale Fingerabdrucke (EIN) des Digitalbildes (IN) mit dem digitalen Fingerabdruck (EIN2) des zweiten Digitalbildes (IN2) übereinstimmt, Übertragen (6) des späteren Zeitpunkts (A), der mit dem gespeicherten Datenpaar (EIN + A) in Verbindung steht.

13. Vorrichtung nach den Ansprüchen 10 bis 12, **dadurch gekennzeichnet, dass** sie das Einschließen eines Codes (EIN + A), der aus dem späteren Zeitpunkt (A) und dem digitalen Fingerabdruck (EIN) des Digitalbildes (IN) hergestellt ist, in eine Blockkette gestattet.

14. Vorrichtung nach einem der Ansprüche 10 bis 13, **dadurch gekennzeichnet, dass** einer des mindestens einen Computerservers (1) ausgebildet ist zum Empfangen (5) von Informationen, die von einer Servergruppe (1b, 1c, 1d, ...) stammen, die im Voraus unbekannte Informationen (Cb, Cc, Cd, ...) ausgeben und Mittel zum Berechnen, um den im Voraus unbekannten Code (C) aus den im Voraus unbekannten Informationen (Cb, Cc, Cd, ...) herzustellen, verwenden können.

15. Vorrichtung nach einem der Ansprüche 10 bis 14, **dadurch gekennzeichnet, dass** sie ein Computerendgerät (71) umfasst, das mit Druckmittel ausgestattet ist, dass einer des mindestens einen Computerservers eine Abbildung (RC) des im Voraus unbekannten Codes (C) an das Computerendgerät (71) übertragen kann und dass das Computerendgerät (71) ausgebildet ist, die Abbildung (RC) des im Voraus unbekannten Codes (C) zu drucken (RC1).

16. Vorrichtung nach einem der Ansprüche 10 bis 14, **dadurch gekennzeichnet, dass** sie ein Computerendgerät (72) umfasst, das mit einer Anzeige ausgestattet ist, dass einer des mindestens einen Computerservers (1) eine Abbildung (RC) des im Voraus unbekannten Codes (C) an das Computerendgerät (72) übertragen kann und dass das Computerendgerät (72) ausgebildet ist, die Abbildung (RC) des im Voraus unbekannten Codes (C) auf seiner Anzeige anzuzeigen (RC2).

17. Vorrichtung nach einem der Ansprüche 10 bis 14, **dadurch gekennzeichnet, dass** sie ein Computerendgerät (73) umfasst, das ein Bild projizieren kann, dass der Computerserver zum Übertragen einer Abbildung (RC) des im Voraus unbekannten Codes an das Computerendgerät (73) ausgebildet ist und dass das Computerendgerät zum Projizieren (RC3) der Abbildung (RC) des im Voraus unbekannten Codes (C) ausgebildet ist.

18. Vorrichtung nach einem der Ansprüche 10 bis 17, **dadurch gekennzeichnet, dass** sie ein Bildbeschaffungs- und -digitalisierungssystem (8) umfasst, das zum Beschaffen des Bildes (I) gemeinsam mit einem Subjekt (S) und einer Abbildung (RC) des im Voraus unbekannten Codes (C) und zum Übertragen (9) einer Digitalisierung (IN) des Bildes (I), oder gegebenenfalls eines digitalen Fingerabdrucks (EIN) des Digitalbildes (IN), an einen des mindestens einen Computerservers (1) ausgebildet ist.

19. Computerproduktprogramm, das Anweisungen umfasst, die, wenn sie von einem Prozessor ausgeführt werden, die Verfahrensschritte nach einem der Ansprüche 1 bis 9 durchführen.

## Claims

1. A method for timestamping digital images used to establish that a digital image was acquired after a first date designated post-date (P) and before a second date designated ante-date (A), comprising the following steps:
- Generating (100) by a first computer server, before the post-date (P), of a code unknown in advance (C).
- Sending (200) by the first computer server, on the post-date, of the code unknown in advance (C).
- Storage (300) by said first computer server of an association (C+P) between the post-date (P) and said code unknown in advance (C).
- (i) Reception (710) by a second computer server, on the ante-date (A), of the joint digital image (IN) of a subject (S) and a representation of the code unknown in advance (C), which representation of the code unknown in advance (C) is printed, written or projected on the subject or on one or more objects such that at least one representation of the unknown, written or projected code unknown in advance is contained in the field of view of said joint digital image (IN), and calculation of a digital fingerprint (EIN) of the digital image (IN),
Or (ii) Reception (720) by the second computer server, on the ante-date (A), of a digital fingerprint (EIN) of the joint digital image (IN) of a subject (S) and a representation of the code unknown in advance (C), which representation of the code unknown in advance (C) is printed, written or projected onto the subject or onto one or more objects such that at least one printed, written or projected representation of the code unknown in advance is contained in the field of view of said joint digital image (IN).
- Storage (800) by the second computer server of one correspondence (EIN + A) of the digital fingerprint (EIN) and the ante-date (A).
- A reception (900) step that is executed after storage (800) of the correspondence (EIN + A) between the digital fingerprint (EIN) and the ante-date (A), and is performed by a third server having access to the database of the second server, said reception (900) step comprising the following sub-steps:
- Reception (910) of a second digital image (IN2) and calculation of a second digital fingerprint (EIN2), or alternatively, direct reception (920) of a second digital fingerprint (EIN2) of a second digital image (IN2).
- Search (930) for the second digital fingerprint (EIN2) in the database of the second computer server.
- In case the second digital fingerprint (EIN2) corresponds (EIN2=EIN) to the stored digital fingerprint (EIN), transmission (940) of the ante-date (A) corresponding to the association between the digital fingerprint (EIN) and the stored ante-date (A).

2. A method for timestamping digital images used to establish that a digital image was acquired after a first date designated post-date (P) and before a second date designated ante-date (A), comprising the following steps:
- Generating (100) by a first computer server, before the post-date (P), of a code unknown in advance (C).
- Sending (200) by the first computer server, on the post-date, of the code unknown in advance (C).
- Storage (300) by said first computer server of an association (C+P) between the post-date (P) and said code unknown in advance (C).
- (i) Reception (710) by a second computer server, on the ante-date (A), of the joint digital image (IN) of a subject (S) and a representation of the code unknown in advance (C), which representation of the code unknown in advance (C) is printed, written or projected on the subject or on one or more objects such that at least one representation of the unknown, written or projected code unknown in advance is contained in the field of view of said joint digital image (IN), and calculation of a digital fingerprint (EIN) of the digital image (IN),
Or (ii) Reception (720) by the second computer server, on the ante-date (A), of a digital fingerprint (EIN) of the joint digital image (IN) of a subject (S) and a representation of the code unknown in advance
(C), which representation of the code unknown in advance (C) is printed, written or projected onto the subject or onto one or more objects such that at least one printed, written or projected representation of the code unknown in advance is contained in the field of view of said joint digital image (IN).
- Storage (800) by the second computer server of one correspondence (EIN + A) of the digital fingerprint (EIN) and the ante-date (A).
- A reception (1000) step that is executed after storage (800) of the correspondence (EIN + A) between the digital fingerprint (EIN) and the ante-date (A), and is performed by a third server having access to the database of the second server, said reception (1000) step comprising the following sub-steps:
- Reception (1010) of a second code unknown in advance (C2) or alternatively, reception (1110) of a second digital image (IN2) containing a representation of a second code unknown in advance (C2) derived from the second digital image (IN2).
- Search (1020) for said second code unknown in advance (C2) in the database of the first computer server.
- In case said second code unknown in advance (C2) corresponds (C2=C) to a stored code unknown in advance (C), transmission (1030) of post-date (P) associated to stored code unknown in advance (C).

3. A method according to Claim 2 comprising the reception (1110) of a new digital image (IN2) containing a representation of the second code unknown in advance (C2) and the determination (1120) of the second code unknown in advance (C2) using the new digital image (IN2) and **characterised in that** it comprises the following additional steps performed by the third server:
- Calculation (1140) of a second digital fingerprint (EIN2) derived from the new digital image (IN2).
- Search (1150) for a second digital fingerprint (EIN2) in the database of the second server.
- In case the second digital fingerprint (EIN2) obtained in step (1150) corresponds (EIN2=EIN) to the stored digital fingerprint (EIN), transmission of the post-date (P) associated to the stored code unknown in advance (C) and the ante-date (A) corresponding to the stored digital fingerprint (EIN) corresponding to the digital image (IN2=IN).

4. A method according to Claims 1 to 3 **characterised in that** the storage (800) step by the second computer server of a correspondence (EIN + A) of the digital fingerprint (EIN) and the ante-date (A) equally comprises insertion by the second computer server into a blockchain, of a code (EIN + A) derived from the digital fingerprint (EIN) of the digital image (IN) and the ante-date (A).

5. A method according to Claims 1 to 4 **characterised in that** during the calculation (100) step of the code unknown in advance (C), the latter is manufactured using information unknown in advance and deriving from one or more external information sources.

6. A method according to one of Claims 1 to 5 **characterised in that** it comprises the following steps, between the sending (200) step of the code unknown in advance (C) and the reception (710) of the digital image (IN) or the reception (720) of the digital fingerprint (EIN) of the digital image (IN):
- Acquisition (400), by the image acquisition system, of an image (I) that jointly contains a subject (S) and a representation of the code unknown in advance (C) sent by the first server.
- Digitisation (500) of the image (I) and sending (610) of the digital image (IN) obtained, or calculation and sending (620) of the digital fingerprint (EIN) of said digital image (IN) to the second computer server.

7. A method according to one of Claims 1 to 6 **characterised in that** one representation of the code unknown in advance (C) is printed on the subject or on one or more objects, and that at least one representation of the code unknown in advance is contained in the field of view of said image (I).

8. A method according to one of Claims 1 to 6 **characterised in that** one representation of the code unknown in advance (C) is displayed on one or more screens contained in the field of view of said image (I)

9. A method according to one of Claims 1 to 6 **characterised in that** one representation of the code unknown in advance (C) is projected on to the subject (S) or on to one or more objects, and that the projection of at least one representation of the code unknown in advance (C) is contained in the field of view of said image (I).

10. A device for timestamping digital images comprising at least one computer server (1) capable of certifying the antecedence of digital documents, equipped with a time measurement system (2), means of calculation (3), particularly for the calculation of digital fingerprints of digital documents (31), means of storage (4), reception (5) and sending (6) of information, **characterised in that** said computer service is fitted with means enabling it to:
- Generate (32) a code unknown in advance (C) and to store a couple (C + P) of data composed of the code unknown in advance (C) and its date of creation (P), i.e. the post-date (P);
- Transmit (6) said code unknown in advance (C);
- (i) receive (5) a joint digital image (IN) of a subject (S) and a representation of the code unknown in advance (C), which representation of the code unknown in advance (C) is printed, written or projected onto the subject or onto one or more objects, such that at least one representation of the code unknown in advance printed, written or projected is contained in the field of view of said digital image (IN), and to calculate (31) the digital fingerprint (EIN) of the digital image (IN);
Or (ii) directly receive the digital fingerprint (EIN) of the joint digital image (IN) of a subject (S) and a representation of the code unknown in advance (C), which code unknown in advance (C) is printed, written or projected onto the subject or onto one or more objects, such that at least one representation of the code unknown in advance printed, written or projected is contained in the field of view of said joint digital image (IN);
- Store a data couple (EIN + A) composed of the digital fingerprint (EIN) of said digital image (IN) and the date of reception (A) of the digital image (IN) or alternatively, the date of reception (A) of its digital fingerprint (EIN), i.e. the ante-date.
- Receive (5) a second digital image (IN2) and to calculate its digital fingerprint (EIN2), or alternatively, is capable receiving a second digital fingerprint (EIN2) of a second digital image (IN2), searching, in its storage capacity (4) the digital fingerprint (EIN) of the digital image (IN) and, in case the two digital fingerprints (EIN2)and (EIN) correspond to each other, to transmit (6) the ante-date (A) associated to the stored data couple (EIN + A).

11. A device for timestamping digital images comprising at least one computer server (1) capable of certifying the antecedence of digital documents, equipped with a time measurement system (2), means of calculation (3), particularly for the calculation of digital fingerprints of digital documents (31), means of storage (4), reception (5) and sending (6) of information, **characterised in that** said computer service is fitted with means enabling it to:
- Generate (32) a code unknown in advance (C) and to store a couple (C + P) of data composed of the code unknown in advance (C) and its date of creation (P), i.e. the post-date (P);
- Transmit (6) said code unknown in advance (C);
- (i) receive (5) a joint digital image (IN) of a subject (S) and a representation of the code unknown in advance (C), which representation of the code unknown in advance (C) is printed, written or projected onto the subject or onto one or more objects, such that at least one representation of the code unknown in advance printed, written or projected is contained in the field of view of said digital image (IN), and to calculate (31) the digital fingerprint (EIN) of the digital image (IN);
Or (ii) directly receive the digital fingerprint (EIN) of the joint digital image (IN) of a subject (S) and a representation of the code unknown in advance (C), which representation of the code unknown in advance (C) is printed, written or projected onto the subject or onto one or more objects, such that at least one representation of the code unknown in advance printed, written or projected is contained in the field of view of said joint digital image (IN);
- Store a data couple (EIN + A) composed of the digital fingerprint (EIN) of said digital image (IN) and the date of reception (A) of the digital image (IN) or alternatively, the date of reception (A) of its digital fingerprint (EIN), i.e. the ante-date.
- Receive (5) a second code unknown in advance (C2), or alternatively, receive a new digital image (IN2) containing a representation of a second code unknown in advance (C2) and analyse this new digital image (IN2) using image analysis means (33) in order to extract the second code unknown in advance (C2);
- Search in its storage capacity (4) the stored code unknown in advance (C), and in case the second code unknown in advance (C2) and the stored code unknown in advance (C) correspond to each other, transmit (6) the post-date (P) associated to the stored data couple (C + P).

12. A device according to Claim 11 adapted to receive another digital image (IN2) containing the representation of the second code unknown in advance (C2) and analyse said other new digital image (IN2) using image analysis means (33) in order to extract the second code unknown in advance (C2), **characterised by** the fact that it also allows to search in its storage capacity (4) the digital fingerprint (EIN) of the digital image (IN), and in case the digital fingerprint (EIN) of the digital image (IN) corresponds to the digital fingerprint (EIN2) of said other digital image (IN2), transmit (6) the ante-date (A) associated to the stored data couple (EIN + A).

13. A device according to Claims 10 to 12 **characterised in that** it allows to include in a blockchain a code (EIN + A) established based on the ante-date (A) and the digital fingerprint (EIN) of the digital image (IN).

14. A device according to one of Claims 10 to 13 **characterised in** one of the at least one computer server (1) is capable of receiving (5) information from a set of servers (1b, 1c, 1d, ...) that are capable of emitting information unknown in advance (Cb, Cc, Cd, ...) and using means of calculation (34) to create the code unknown in advance (C) using this information unknown in advance (Cb, Cc, Cd, ...).

15. A device according to one of Claims 10 to 14 **characterised in that** it comprises a computer terminal (71) equipped with means of printing, that one of the at least one computer server is capable of transmitting (6) a representation (RC) of the code unknown in advance (C) to this computer terminal (71) and that said computer terminal (71) is capable of printing (RC1) this representation (RC) of the code unknown in advance (C).

16. A device according to one of Claims 10 to 14 **characterised in that** it comprises a computer terminal (72) equipped with a screen, that one of the at least one computer server (1) is capable of transmitting a representation (RC) of the code unknown in advance (C) to same computer terminal (72), and that same computer terminal (72) is capable of displaying (RC2) this representation (RC) of the code unknown in advance (C) on its screen.

17. A device according to one of Claims 10 to 14 **characterised in that** it comprises a computer terminal (73) capable of projecting an image, that the computer server is capable of transmitting a representation (RC) of the code unknown in advance to same computer terminal (73), and that same computer terminal is capable of projecting (RC3) this representation (RC) of the code unknown in advance (C).

18. A device according to one of Claims 10 to 17 **characterised in that** it comprises an image acquisition and digitisation system (8) capable of acquiring the joint image (I) of a subject (S) and a representation (RC) of the code unknown in advance (C), and to transmit (9) to one of the at least one computer server (1) a digitisation (IN) of this image (I), or alternatively, a digital fingerprint (EIN) of this digital image (IN).

19. Computer programme product comprising instructions for, when executed by a processor, implementing the steps of the method according to any of Claims 1 to 9.
